(19) Europäisches Patentamt
European Patent Office
Office européen des brevets

(11) **EP 4 664 283 B1**

(12) **EUROPEAN PATENT SPECIFICATION**

(45) Date of publication and mention
of the grant of the patent:
**05.08.2026 Bulletin 2026/32**

(21) Application number: **24181767.5**

(22) Date of filing: **12.06.2024**

(51) International Patent Classification (IPC):
**G06F 11/34** *(2006.01)* **G06F 9/48** *(2006.01)*
**G06F 9/50** *(2006.01)*

(52) Cooperative Patent Classification (CPC):
**G06F 9/4881; G06F 9/50; G06F 9/5072;**
**G06F 11/3442;** G06F 2209/504; G06F 2209/508

(54) **OFFER RATES OF COMPUTING DEVICE RESOURCES**

ANGEBOTSRATEN VON RECHNERVORRICHTUNGSRESSOURCEN

TAUX D'OFFRE DE RESSOURCES DE DISPOSITIF INFORMATIQUE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**17.12.2025 Bulletin 2025/51**

(73) Proprietor: **LoopMe Innovation Limited**
**London EC1M 4AH (GB)**

(72) Inventors:
• **Newnham, Leonard**
**London, EC1N 8FH (GB)**
• **Smith, Tom Hunter**
**London, EC1N 8FH (GB)**

(74) Representative: **Haseltine Lake Kempner LLP**
**One Portwall Square**
**Portwall Lane**
**Bristol BS1 6BH (GB)**

(56) References cited:
**EP-B1- 3 455 732** US-A1- 2007 136 732
**US-A1- 2019 294 473**

**Description**

Background

Document EP3455732B1 relates to a computer-implemented method for measuring, modelling (via robust regression on a heteroscedastic signal) and forecasting heap usage in a software execution environment, and then taking actions such as allocating additional memory based on the forecast.

Examples herein relate to systems and methods for determining an offer rate of computing device resource, and offering computing device resource at the determined rate.

SUMMARY OF INVENTION

According to one aspect of the invention, a platform, which may be referred to herein as a resource matching platform, comprises processing circuitry, the processing circuitry comprising: a monitoring module configured to periodically determine a mean utilisation rate, wherein the mean utilisation rate comprises a rate at which computing device resource is utilised by an entity; and an offer module configured to offer computing device resource to the entity, wherein the offer module is further configured to adapt an offer rate at which computing device resource is offered to the entity based on a current determined mean utilisation rate for the entity. The monitoring module is configured to determine the current mean utilisation rate by: determining (i) a mean utilisation rate and (ii) a measure of variability of the utilisation rate for each of a plurality of candidate monitoring windows; determining, for each of the plurality of candidate monitoring windows, a first adjusted rate, wherein the first adjusted rate comprises the mean utilisation rate for that candidate monitoring window plus the measure of variability for that candidate monitoring window; determining, for each of the plurality of candidate monitoring windows, a second adjusted rate, wherein the second adjusted rate comprises the mean utilisation rate for that candidate monitoring window minus the measure of variability for that candidate monitoring window; identifying a first candidate monitoring window of the plurality of candidate monitoring windows, wherein the first candidate monitoring window is the candidate monitoring window for which the first adjusted rate is at a minimum; identifying a second candidate monitoring window of the plurality of candidate monitoring windows, wherein the second candidate monitoring window is the candidate monitoring window for which the second adjusted rate is at a maximum; selecting the shorter of the first and second candidate monitoring window as the monitoring window; and determining the mean utilisation rate for that window as the determined current mean utilisation rate for the entity.

Computing device resource may for example comprise any or any combination of: compute resource (e.g. processor usage); display or other output resources (e.g. screen or speaker usage); sensing resource (e.g. camera/microphone usage); or the like. In more detail, the computing device resource may for example comprise available data processing capability and the utilisation thereof may comprise utilisation of the data processing capability. In another example, the computing device resource may comprise availability of at least part of a screen or other display to display data, and utilisation of the resource may comprise displaying data on that display. The data may be predetermined data or particular data, for example comprising particular information.

The mean utilisation rate may be determined as, or based on, a ratio between an amount of computing device resource utilised by the entity, and the amount of computing device resource offered to the entity. The offer rate may comprise, or be based on, a ratio between an amount of computing resource offered to the entity and an amount of available computing device resource (e.g. an amount of computing device resource which could potentially be offered to the entity). The amount of resource offered may be a number of offers made and/or the amount of resource utilised may be a number of resource utilisation events, for example as further described below.

Selecting a candidate monitoring window, and in turn determining a mean utilisation rate, in this manner may allow selection of data which contributes to the accuracy of an estimate of a current, or recent, mean utilisation rate, without including historic data which does not reflect the current mean utilisation rate, as is further discussed herein after. This in turn allows an offer rate to be tailored to the mean utilisation rate so as to manage data flow and resource utilisation in a system in which resource may be matched to entities seeking such resource.

The candidate monitoring windows comprise a plurality of time windows having a common end time and different start times. In some examples, the common end time may be close to (for example within an hour, within half an hour or within a few minutes or within a few seconds) of a current time at which a current offer rate is being determined.

In some examples, the offer module is configured to offer computing device resource at a minimum offer rate when the determined mean utilisation rate is below a first threshold and/or to offer computing device resource at a maximum offer rate when the determined mean utilisation rate is above a second threshold. For at least some determined mean utilisation rates, (in some examples, rates between the first and second threshold) the offer module may be configured to offer computing device resource at a rate which is proportional to the determined mean utilisation rate, wherein a ratio between the offer rate and the determined mean utilisation rate (or vice versa) may be predetermined by the entity.

For example, the offer rate may be determined as the higher of (i) a predetermined minimum offer rate and (ii) a determined offer rate. The determined offer rate may be determined based on the mean utilisation rate and the amount of available resource, and in some examples a number of offers sent in in the selected candidate monitoring window.

In some examples, the offer rate may be determined as a throttle rate applied to the available resource, wherein the throttle rate comprises the lower of (i) a predetermined maximum throttle rate and (ii) a determined throttle rate comprising:

$$1 - \frac{mean\ utilsation\ rate * offers\_sent * n}{available\ resource}$$

wherein n comprises a predetermined factor and offers_sent comprises the number of offers sent in the selected candidate monitoring window.

For example, a throttle rate of 0.9 may mean than 90% of the available resource is not offered to the entity, and 10% is offered, whereas a throttle rate of 0.3 may mean that 70% of the available resource is offered to the entity. There may be a maximum throttle rate to ensure that at least some offers are made, as is further discussed below. If the determined throttle rate is, say, 0.8 and the maximum throttle rate is 0.9, then the determined throttle rate may be utilised. If however the determined throttle rate is, say 0.95, and the maximum throttle rate is 0.9, then the maximum throttle rate may be utilised.

In some examples, the monitoring module is further configured to monitor a utilisation rate over time and to determine the mean utilisation rate therefrom. Monitoring the utilisation rate comprises receiving a plurality of notifications of computing device resource utilisation, each notification comprising an identifier.

In some examples the monitoring module is further configured to identify available resource, and where the offers comprise offers of identified available resource. For example a notification of available computing device resource may be received by the platform and may be associated with an identifier (or "key") which may for example identify characteristics of a computing device resource available, and/or in relation to the computing device having the available resource (e.g. any or any combination of a device identifier; a device type, the device location, or the like).

For example, the offer module may be configured to receive details of at least one available resource of at least one computing device, and offer(s) comprise offer(s) of the available resource(s). In some examples, the offer module is further configured to include, in the offer, details of the available computing device resource. For example, the offer module may include an identifier (e.g. "key") received with a notification of available resource in an offer.

The platform may further comprise a resource allocation module configured to, when an offer of a computing device resource is accepted by an entity, request allocation of the offered computing device resource to that entity. For example, the resource allocation module may be configured to receive data from the entity to which a computing device resource has been offered, and to send the data to the computing device providing or having the offered computing device resource, wherein the data is to be processed by the computing device in utilising that computing device resource.

In some examples, the offer module is configured to offer the same computing device resource to a plurality of entities and, if more than one of the plurality of entities request that computing device resource, the resource allocation module is to select an entity of the plurality of entities and to request allocation of that computing device resource to the selected resource requesting entity.

In some examples, the measure of variation comprises a standard error.

According to a second aspect of the invention, a method of resource matching comprises, by processing circuitry: determining a plurality of candidate monitoring windows, the candidate monitoring windows comprising different periods of time during which computing device resource is utilised by an entity; determining (i) a mean utilisation rate and (ii) a measure of variability of the utilisation rate for each of a plurality of candidate monitoring windows, the mean utilisation rate comprising a mean rate at which computing device resource is utilised by the entity in a monitoring window; determining, for each of the plurality of candidate monitoring windows, a first adjusted rate, wherein the first adjusted rate comprises the mean utilisation rate plus the measure of variability for that candidate monitoring window; determining, for each of the plurality of candidate monitoring windows, a second adjusted rate, wherein the second adjusted rate comprises the mean utilisation rate minus the measure of variability for that candidate monitoring window; identifying a first candidate monitoring window of the plurality of candidate monitoring windows, wherein the first candidate monitoring window is the candidate monitoring window for which the first adjusted rate is at a minimum; identifying a second candidate monitoring window of the plurality of candidate monitoring windows, wherein the second candidate monitoring window is the candidate monitoring window for which the second adjusted rate is at a maximum; selecting the shorter of the first and second candidate monitoring window as the monitoring window and the mean utilisation rate for that window as a determined mean utilisation rate for the entity; offering a computing device resource to the entity at a rate based on the determined mean utilisation rate; wherein the mean utilisation rate and the rate at which computing device resource is offered are determined on a periodic basis.

The mean utilisation rate may be determined using a ratio between an amount of computing device resource utilised, and the amount of computing device resource offered. The candidate monitoring windows have a common end time and different start times.

In some examples, the method comprises offering computing device resource at a minimum offer rate when the determined mean utilisation rate is below a first threshold and/or offering computing device resource at a maximum offer rate when the determined mean utilisation rate is above a second threshold. The method may comprise, for at least some determined mean utilisation rates (e.g. between a first and second threshold), offering computing device resource at a rate which is proportional to the determined mean utilisation rate. The offer rate may comprise, or be based on, a ratio between an amount of computing resource offered and an amount of available computing device resource.

The method may comprise offering computing device resource at an offer rate determined as the higher of (i) a predetermined minimum offer rate and (ii) a determined offer rate based on the available computing device resource and the mean utilisation rate, for example up to a maximum rate comprising the rate at which computing device resource is available.

The offer rate may be determined as a throttle rate applied to the available computing device resource, wherein the throttle rate comprises the higher of (i) a predetermined maximum throttle rate and (ii) a determined throttle rate comprising:

$$1 - \frac{mean\ utilsation\ rate * offers\_sent * n}{available\ resource}$$

wherein n comprises a predetermined factor and offers_sent comprises a number of offers sent in the selected candidate monitoring window.

In some examples, the method further comprises receiving a plurality of notifications of computing device resource utilisation events, each notification comprising an identifier and wherein the utilisation rates are determined based on the received notifications. In such examples, subsequent steps of the method may be applied in relation to notifications of computing device resource utilisation events matching predetermined criteria.

In some examples, the method further comprises receiving a plurality of notifications of computing device resource availability from at least one computing device providing computing device resource, each notification comprising an identifier. In some such examples, the offers comprise offers of available computing device resource identified by received notifications of computing device resource availability.

In some examples, the method further comprises receiving a resource request in response to at least one of the offers, and passing the resource request to a computing device providing the offered computing device resource.

The method may further comprise determining a mean utilisation rate for each of a plurality of entities; offering the computing device resource to each entity at a rate based on the determined mean utilisation rate for that entity; receiving a plurality of resource requests in response to at least one of the offers, selecting one of the requests; and passing the selected resource request to a computing device providing the offered computing device resource.

In some examples, the method further comprises receiving an acceptance of a resource request from the computing device providing the computing device resource.

In some examples, the method further comprises determining a mean utilisation rate for a category of resource, wherein resources are categorised based on an identifier associated therewith; and offering the computing device resource to the entity at a rate based on the determined mean utilisation rate for resource in the same category of resource.

In some examples, the method further comprises, when an offer for a resource is accepted by at least one computing device providing the offered computing device resource, allocating, or requesting allocation of, the offered computing device resource to the computing device.

In some examples, the method further comprises receiving data from the entity and sending the data to the computing device providing the computing device resource, wherein the data is to be processed by the computing device providing the computing device resource in utilising the computing device resource.

The platform of the first aspect of the invention may carry out any of the method steps of the second aspect of the invention.

According to a third aspect of the invention, a non-transitory machine readable medium is encoded with instructions which, when executed, cause processing circuitry (e.g. one or more processors) to carry out a method having any or any combination of the step set out in the method of the second aspect of the invention. According to a fourth aspect of the invention, a non-transitory computer readable medium is encoded with instructions which, when executed, cause processing circuitry to act as the platform of the first aspect of the invention. Further aspects of the invention comprise use of the platform of the first aspect of the invention.

Further features of the aspects and features of the invention are set out below and in the accompanying claims.

BRIEF DESCRIPTION OF THE FIGURES

The Figures depict various embodiments for purposes of illustration only. One skilled in the art will readily recognise from the following discussion that alternative embodiments of the apparatus and methods illustrated herein may be employed without departing from the principles described herein.

Figure 1 is a schematic drawing of an example resource matching platform;
Figure 2 is a graph illustrating aspects of how an offer rate may be determined;
Figure 3 is a schematic drawing of an example system comprising a resource matching platform;
Figure 4-7 show flow charts of example methods for use in resource matching; and
Figure 8 is a schematic drawing of an example memory in conjunction with a processor.

DETAILED DESCRIPTION

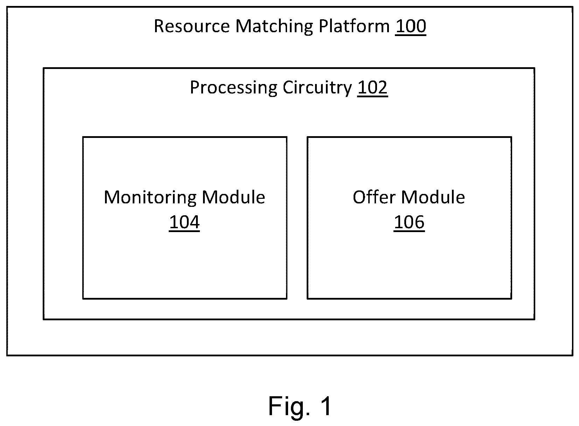

Figure 1 shows a schematic drawing of a resource matching platform 100 (which may also be referred to simply as a 'platform') comprising processing circuitry 102. The processing circuitry 102 comprises a monitoring module 104 and an offer module 106. Each module 104, 106 may be implemented by one or more processors executing machine readable instructions stored in a Machine Readable Medium (MRM), or by one or more processors operating in accordance with instructions embedded in processing circuitry. The actions ascribed to a module 104, 106 may all be performed by a single processor or divided amongst several processors. The term 'processor' is to be interpreted broadly to include a CPU, processing unit, ASIC, logic unit, programmable gate array, etc.

The monitoring module 104 is configured to periodically determine a mean utilisation rate for a monitoring window, the mean utilisation rate comprising a rate at which a computing device resource is utilised by an entity. The entity may for example comprise a computing device. This entity is generally referred to herein as a resource requesting entity, but may alternatively be referred to as a resource seeking entity, or a resource utilising entity. For example, computing device resource may comprise any or any combination of: compute resource (e.g. processor usage); display or other output resources (e.g. screen or speaker usage); sensing resource (e.g. camera/microphone usage); or the like. The mean utilisation rate may be determined using a ratio between the amount of resource utilised, and the amount of resource offered, as described in greater detail below.

It may be generally intended that the amount of resource offered exceeds that which is utilised by a particular entity (e.g. the number of offers made may be intended to exceed the number of utilisation events). For example, a resource offered may not meet specification(s) of the resource requesting entity. In addition, as offers of a particular resource may be sent to multiple resource requesting entities, it may be the case that there is competition for a particular resource, and a resource that a particular resource requesting entity may request may instead be allocated to a competing resource requesting entity. Therefore, providing an amount of offers which exceed the utilisation may make it more likely to ensure that an amount of resources required is made available for use.

However, it will be further understood that if the ratio of utilisation to offers of resource is too low, then the resource requesting entity is receiving many more offers of resource than it utilises. Processing and sending such offers may consume undue amounts of processing and/or network resources.

The offer module 106 is configured to offer a computing device resource to the resource requesting entity. In some examples, the offer may be associated with an identifier (or "key") which may for example identify characteristics of at least one of the resource available, and/or in relation to the computing device having the available resource (e.g. any or any combination of a device identifier; a device type, the device location, or the like). The offer may maintain a record (e.g. a count) of the offers made, for example in association with the identifier, or a category of the offered resource which may be determined based on the identifier.

In some examples, the monitoring module 104 is configured to determine a mean utilisation rate for each of a plurality of resource requesting entities. In some examples, the monitoring module 104 is configured to determine a mean utilisation rate for at least one resource requesting entity, wherein the utilisation comprises utilisation, by that entity, of resource associated with identifiers matching predetermined criteria. This may comprise determining a mean utilisation rate for a category of resource, wherein resources may be categorised based on an identifier associated therewith (e.g. based on the identifier meeting predetermined criteria).

In some examples, the offer module 106 is configured to offer the same computing device resource to each of a plurality of resource requesting entities at an offer rate determined for that resource requesting entity. In some examples, the offer module 106 is configured to offer computing device resource at an offer rate determined for resources associated with an identifier matching the identifier of the offered resource, and/or associated with identifiers matching predetermined criteria. This may comprise offering the resource to the or each entity at a rate based on the determined mean utilisation rate for resources in the same category of resources for that entity.

More particularly, the offer module 106 is configured to adapt the rate at which computing device resource is offered to the or to each entity based, at least in part, on the current determined mean utilisation rate for that entity (noting that the utilisation rate may be reevaluated periodically). In some examples, the offer rate may be determined subject to maximum and/or minimum offer rates.

In particular, as will be further described below, an offer rate may be matched to a utilisation rate so as to tailor an offer rate to a particular resource requesting entity's resource utilisation. The resource may be utilised across a plurality of computing devices and/or across a plurality of software applications provided on one or more computing device(s) and/or across a plurality of contexts within software applications. Moreover, as the offer rate is evaluated periodically, the offer rate can adapt to changes in the resource requesting entity's use of a resource.

When compared to alternatives which may comprise offering all available resource to a resource requesting entity (or all available resource matching predetermined criteria), which may considerably exceed any need for the resource by the resource requesting entity, data traffic may be controlled such that an offer rate offers an amount of computing device resource which is appropriate given the past actions of that resource requesting entity. Without such control, for example in cases where a resource is particularly prevalent, this could result in an entity being overwhelmed by the volume of offers, and/or could lead to any or any combination of: increased latency, inefficient processing of offers and/or processing requests for resource in response to the offers, and higher infrastructure costs. Moreover, as the utilisation rate is reevaluated periodically, this allows the offer rate to change in response to changing utilisation behaviour.

Thus, some embodiments of the invention relate to controlling, or 'throttling', the rate of offers of computing device resource based on a utilisation history.

In particular, to evaluate a mean utilisation rate for the or each resource requesting entity (and in some examples, for a category of resource), the monitoring module 104 first determines, for each of a plurality of candidate monitoring windows, (i) a mean utilisation rate and (ii) a measure of variability of the utilisation rate. As is further set out below, a mean utilisation rate of the determined plurality of mean utilisation rates is selected as the utilisation rate of the entity based on certain criteria.

The candidate monitoring windows comprise different periods of time during which a computing device resource may be utilised by an entity. The candidate monitoring windows comprise a plurality of time windows having a common end time and different start times. In some examples, the common end time matches, or is immediately prior (e.g. within 1-50 milliseconds, within 1-10 seconds, or within 1-10 minutes) to evaluation of the mean utilisation rate. In some examples, the common end time is an end time of a particular time 'bucket' as discussed below.

For example, the candidate monitoring windows may comprise a series of time windows which consider increasingly longer historic resource utilisation patterns of the entity. For example, the historic resource utilisation patterns may be usage patterns of resource associated with an identifier matching predetermined criteria. The time windows may increase in length monotonically, for example each being n seconds longer than an immediately shorter time window, wherein n may be any number.

For example, a set of candidate monitoring windows (CWs) may comprise:

$$CW_1 = (T_{end} - 1 \text{ minute}) \text{ to } T_{end}$$

$$CW_2 = (T_{end} - 2 \text{ minutes}) \text{ to } T_{end}$$

$$CW_N = (T_{end} - N \text{ minutes}) \text{ to } T_{end}$$

Where $T_{end}$ is the common end time. While each candidate monitoring window is one minute longer than the last in this example, other time differences may be used in other examples.

In examples, the candidate monitoring windows may be made up of time buckets, i.e. discrete time periods which follow one another. For example the length of the time bucket may be the length of time by which the candidate monitoring windows differ in length. For example, each time bucket may be a few seconds in length, 1 minute in length, ten minutes in length, or some other time period and each candidate monitoring window may be one 'bucket' longer than the previous. Put another way, while a particular candidate monitoring window may comprise n time buckets (time buckets 1 to n), being n*bucket_length long, the next candidate monitoring window may comprise the same n time buckets, plus one additional time bucket, and be (n+1)* bucket_length long.

In some cases, the bucket length may vary (while adding one additional bucket for each successive candidate monitoring window). For example, this may allow for longer buckets in relation to events which occurred less recently when compared to those which occurred more recently. For example, bucket length y may be determined as:

$$y = ae^{kx}$$

where x = bucket number and a and k are constants. In such example, when k=0, bucket length is constant.

The mean utilisation rate may be determined as the number of times resource(s) was/were used in the monitoring window (i.e., the number of offers which resulted in a request for resource utilisation, wherein the request was fulfilled by a resource providing entity) divided by the number of offers of resource received by the resource requesting entity in that window. In some examples, the number of times resource(s) was/were used in the monitoring window may indicate the number of times particular data (or particular data content) was sent to resource providing entity/entities for processing thereby, thus utilising the resource. For example, the resource may comprise use of a display screen of a computing entity to display particular data, the particular data may be displayed on display screens of a plurality of different computing entities and the number of times resource(s) was/were used in the monitoring window may be indicative of the total number of times the data was displayed. In some examples, the monitoring module 104 may receive data indicative of the number of times a particular type of resource has been utilised and/or may receive data indicative of each resource utilisation event.

For example, the monitoring module 104 may monitor a utilisation rate over time and determine the mean utilisation rates for each candidate monitoring window therefrom.

In some examples, the monitoring module 104 may receive a notification of resource utilisation directly or indirectly from a computing device which provided the resource (the resource providing entity). Such a notification may comprise an identifier, which may for example encode details, features and/or characteristics of the resource utilised, the data used in utilising the resource and/or of the computing device which provided the resource. The identifier may for example encode any or any combination of: an indication of data displayed or processed, an amount of resource consumed (e.g. size of a display utilised), details of at least one capability of the computing device itself, an indication of the source of the request which resulted in use of the resource (e.g. the identity of the resource requesting entity), a location of the device, or the like.

The measure of variability may for example be based on a variance, standard deviation or standard error. For example, the measure of variability for a time window may comprise the standard error determined as:

$$Standard\ error = \frac{standard\ deviation}{\sqrt{N}},$$

where N is the number of offers sent to the resource requesting entity in a time window.

In addition, a standard deviation may be determined as:

$$Standard\ deviation = \frac{\sum_{i=1}^{N}(x_i - \overline{x})}{N - 1}$$

Where $x_i$ is a binary value indicating whether an offer resulted in a resource utilisation event. For example, a value of 1 may indicate that an offer was received, a request for the resource was made by the resource requesting entity, the request was accepted by the resource providing entity and the resource was utilised. A value of 0 may indicate that an offer was received but that (i) this did not result in a request for the resource, (ii) the request was not accepted by the resource providing entity or (iii) utilisation of the resource failed in some way. $\overline{x}$ is the mean of $x_i$ over the N offers made during the candidate monitoring window.

The offers and/or utilisation events may comprise offers and/or utilisation events which meet predetermined criteria, as may be determined based on an identifier associated therewith. For example, the method may consider resource utilisation events having identifiers indicating particular criteria, e.g. that (i) particular data (e.g. payload data) was provided for use in resource utilisation (e.g. as provided by a resource requesting entity); and/or (ii) the entity utilising the resource was a particular resource requesting entity, such that utilisation events relating to the same data, or data type, and the same resource requesting entity may be identified. Alternatively or additionally, the method may consider offers of resource matching predetermined criteria, for example criteria indicative that the resource is suited to specifications of the resource requesting entity in relation to the predetermined data, or the particular payload. Alternative or additional criteria may be applied in other examples, for example any or any combination of a context in which the resource was utilised (e.g. the software program in which the resource was utilised), a manner in which the resource was utilised, the country or region, or the like.

The monitoring module 104 is further configured to determine, for each of the plurality of candidate monitoring windows, a first adjusted rate, wherein the first adjusted rate comprises the mean utilisation rate of a candidate monitoring window plus the measure of variability for that candidate monitoring window. The monitoring module 104 determines, for each of the plurality of candidate monitoring windows, a second adjusted rate, wherein the second adjusted rate comprises the mean utilisation rate for that candidate monitoring window minus the measure of variability for that candidate monitoring window.

The monitoring module 104 is further configured to identify a first candidate monitoring window of the plurality of candidate monitoring windows, wherein the first candidate monitoring window is the candidate monitoring window for which the first adjusted rate is at a minimum, and further to identify a second candidate monitoring window of the plurality of candidate monitoring windows, wherein the second candidate monitoring window is the candidate monitoring window for which the second adjusted rate is at a maximum.

The monitoring module 104 is further configured to select the shorter of the first and second candidate monitoring windows as the monitoring window, and to determine the mean utilisation rate for that window as the determined mean utilisation rate for the resource requesting entity.

In some examples, the offer module 106 is configured to offer the resource at a minimum offer rate when the determined mean utilisation rate is below a threshold. This may prevent a flow of offers from stopping or becoming very low when the utilisation rate is low or zero. Were the offer rate to reduce to, or close to, zero, this could mean that an increase in resource utilisation which is desired by a resource requesting entity would not be identified, as there would be no or few offers available to accept. However, if offers are still being made, albeit at a low rate, an acceptance of such offers may be detected and the offer rate may be adapted to respond thereto. For example, the offer rate may increase from the minimum in response to an increase in resource utilisation until either the offer rate is appropriate for the required resource given the new utilisation rate, or until all resource has been offered to the entity.

In some examples, the offer module 106 is configured to offer the resource at a maximum offer rate when the determined mean utilisation rate is above a threshold. The maximum rate may for example comprise an offer of all available resource, or may be set by the entity and/or the resource matching platform 100, or may comprise an offer of available resource matching criteria set by the entity, or the like.

In some examples, the offer module 106, for at least some determined mean utilisation rates, is configured to offer the resource at a rate which is proportional to the determined mean utilisation rate. This may be subject to maximum and minimum offer rates.

The offer rate may for example be determined as:

$$\text{target\_send\_rate} = \text{mean\_utilisation\_rate} * \text{offers\_sent} * n$$

$$\text{offer\_rate} = \min(1, \max(0, \text{target\_send\_rate} / \text{available resource}))$$

Wherein target_send_rate is an offer rate before it is subject to maximum and minimum values and n comprises a predetermined factor, offers_sent is the number of offers sent to the resource requesting entity (which may be less than the amount of resource available) and available resource represents the number of offers which could have been sent, if all available resource was offered. This may be an integer or a non-integer. In some examples, n is a factor indicative of a predetermined intended ratio between the number of offers and the number of utilisation events. For example, in order to manage network traffic and/or assessment of offers, an entity may set a maximum ratio of offers to resource utilisation, and setting n based on that ratio ensures that the ratio will not be exceeded.

In other words, in some examples, the offer rate is determined as the higher of (i) a predetermined minimum offer rate and (ii) a determined offer rate.

In some examples, the offer rate is determined as a throttle rate applied to the available resource, wherein the throttle rate comprises the lower of (i) a predetermined maximum throttle rate and (ii) a determined throttle rate comprising:

$$1 - \frac{mean\ utilsation\ rate * offers\_sent * n}{available\ resource}$$

wherein n comprises a predetermined factor, offers_sent is the number of offers sent in the selected monitoring window and available resource represents the number of offers which could have been sent, if all available resource was offered. This may be an integer or a non-integer. In some examples, n is a factor indicative of a predetermined intended ratio between the number of offers and the number of utilisation events. For example, in order to manage network traffic and/or assessment of offers, an entity may set a maximum ratio of offers to resource utilisation, and setting n to that ratio ensures that the ratio will not be exceeded.

An offer rate, e.g. a throttle rate, may be provided for example by applying a probability of passing on an offer of an available resource. For example, a random number generator may generate a number between 0 and 1 in association with each available resource, and the probability may be a threshold between 0 and 1, wherein if the threshold is met, the offer of the resource is made and if the threshold is not met, the offer of the resource is not made. Other methods may be used in other examples.

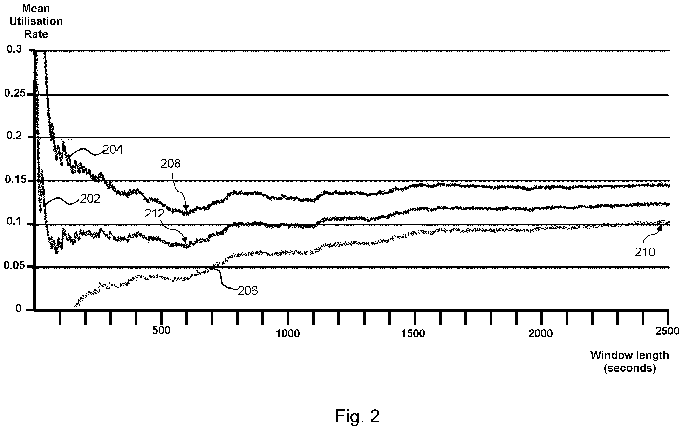

Figure 2 shows a worked example illustrating such an approach where the utilisation rate is decreasing over time.

The vertical axis shows a mean utilisation rate, and the horizontal axis shows the length of a candidate monitoring window. A mean utilisation rate line 202 shows an example of a determined mean utilisation rate for each candidate monitoring window. A first adjusted rate line 204 shows the mean utilisation rate for that candidate monitoring window rate plus the measure of variability - in this example, the standard error - for the candidate monitoring window, and a second adjusted rate line 206 shows the mean utilisation rate for that candidate monitoring window minus the standard error for the candidate monitoring window.

In this example, the first candidate monitoring window (i.e. the candidate monitoring window for which the first adjusted rate is at a minimum 208) is a monitoring window of 600 seconds in length and the second candidate monitoring window (i.e. the candidate monitoring window for which the second adjusted rate is at a maximum 210) is a window of 2490 seconds in length. As the first candidate monitoring window is of shorter length than the second candidate monitoring window, the associated mean utilisation rate 212 (mean utilisation rate = 0.076) is selected, and the offer rate is based thereon.

As will be appreciated, when a window length is too short, then a result may be inaccurate due to insufficient data points. However, if a window length is too long then the results may be inaccurate due to data being out of date as the utilisation rate may change over time. The approach set out above allows a calculation of an appropriate window length that gives an accurate estimate of the utilisation rate at the time of determination using historical data.

To consider this in more detail, it may be considered that the method seeks to determine the resource requesting entities actual utilisation rate at t=0, i.e. the common end point of the candidate monitoring windows. This can be estimated using the historical data so long as the rate is approximately constant. However, if the utilisation rate changes over time then using more historical data will negatively impact accuracy. The method identifies the time window for which historical data positively impacts the accuracy.

First, it can reasonably be assumed that the actual utilisation rate at t=0 is between the mean utilisation rate $\pm$ 1 standard error, i.e., the upper and lower lines 204 and 206 shown in Figure 2, which therefore provide upper and lower bounds.

The most recent data can be assumed to be the most accurate as the actual utilisation rate will have changed the least. The standard error tends to decrease as the sample size (or in this context, the length of the candidate monitoring window) increases, so the minimum upper bound and the maximum of the lower bound tend to progressively narrow as time windows increase in length.

If the actual utilisation rate is constant across the window, the minimum of the upper bound should continue to fall and the maximum of the upper lower bound should continue to rise.

However, if the upper bound starts to rise or the lower bound starts to fall, this indicates the actual utilisation rate has changed. Until this point (i.e. until the actual utilisation rate changes), adding more historical data makes the estimation of the actual utilisation rate at t=0 more accurate. However, beyond this point, adding more historical data will make the estimation of the actual utilisation rate at t=0 less accurate.

Therefore, the longest window before a minimum point in the upper bound (indicated by line 204) or a maximum point in the lower bound (indicated by line 206) may provide an accurate estimate of the actual utilisation rate at t=0. If the window associated with the maximum or minimum in each line is the same, then that window may be selected. If there are two windows with the same minimum/maximum value as applicable for a given line, then the shorter may be selected. It may be noted that if there is no inflection point, then the longest candidate monitoring window may be selected as this will be the maximum/minimum value by action of the fact that the standard error reduces with sample size. If only one of the upper and lower bounds is associated with a maximum or minimum value, then the associated window may be selected. In any other case, the longest window length may be selected for one or both the upper and lower bounds.

Moreover, as a factor (e.g. factor n described above) may be set based on a maximum acceptable ratio of traffic relating to offers and resource utilisation, the offer rate can be tailored to a particular entity's offer processing capabilities.

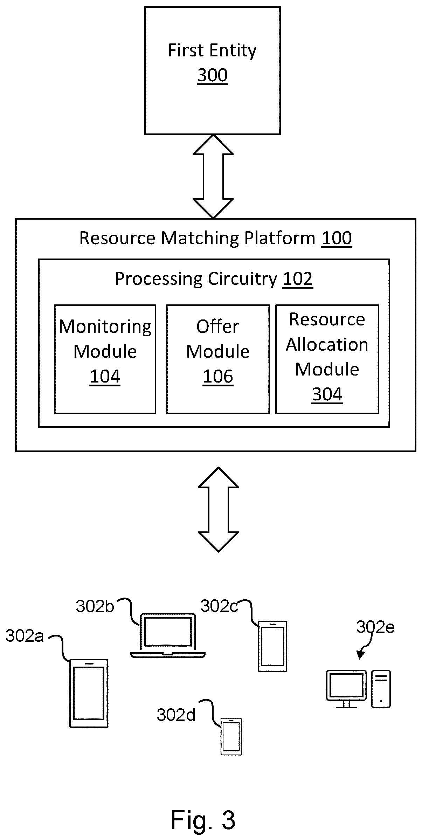

Figure 3 shows an example of a system comprising a first entity 300 (which may be described as a resource requesting, or resource seeking, entity), a plurality of second entities 302a-e, (which may be described as a plurality of resource providing entities) and a resource matching platform 100, which may have any of the features described in relation to Figure 1, and further comprises a resource allocation module 304. The first and/or second entities may comprise computing devices, and a single device may act as either a first or a second entity. In some examples, the first entity 300 comprises one or more servers, for example configured as, or as part of, a data centre.

The first entity 300 may comprise processing circuitry, and may seek to utilise at least one resource (e.g. any or any combination of compute resource, display or other output resources, sensing resource or the like) of a second entity 302. In some examples, at least one second entity 302 comprises a user device. The second entities 302a-e may for example comprise any computing device, for example comprising mobile telephones, tablets, desk top computers, laptop computers, wearable devices such as smart watches, Smart Televisions, Smart assistants, Internet of Things (IoT) devices, or the like.

In some examples, each time the first entity 300 utilises a resource of a second entity 302, the second entity 302 may (directly or via an intermediary) provide a notification to the resource matching platform 100. The notification may for example comprise an identifier, which may for example identify characteristics of at least one of the resource utilised, the data supplied by the first entity 300 and used in resource utilisation, a device identifier, a device type, the device location, the identity of the first entity, or the like. The identifier (which may be referred to as a 'key' in some examples) may for example encode any or any combination of: (i) a context of resource utilisation (e.g. was the resource utilised in the context of a particular software application, in the context of a particular web based facility or web page, or by particular hardware, or the like); (ii) a location of a device providing the resource (e.g. a country, city, region or the like); (iii) an identifier of the device which provided the resource; (iv) an identifier of the device type that provided the resource (e.g. phone/tablet/computer/watch, and/or in some examples an indication of a brand or model of the device); (v) details of how the resource was provided (e.g. an amount of screen utilised, which hardware components may have been used and/or an amount of compute power used); (vi) details of the data provided by the first entity 300 and used in resource utilisation; (vii) time of resource usage; (viii) identification of the entity utilising the resource, (ix) identification of any intermediaries in allocating the resource; (x) identification of any decision making entities involved in allocating the resource, or the like.

In addition, the second entities 302a-e may advertise, or provide notification of, resource which is available for utilisation to the resource matching platform 100. In this way, the resource matching platform 100 (e.g. the monitoring module 104 thereof) can identify available resources. In such examples, any offers made by the offer module 106 may comprise (and not exceed) offers of identified available resource. In other examples, the resource matching platform 100 may be provided with data indicative of available resource in some other way, for example via a further platform which aggregates available resource.

In some examples, the available resource advertised may also be associated with an identifier or key, which may comprise any or any combination of (i) a context of the available resource utilisation (e.g. whether the resource is available in the context of a particular software application, in the context of a particular web based facility or web page, or by particular hardware, or the like); (ii) a location of a device having the available resource (e.g. a country, city, region or the like); (iii) an identifier of the device having the available resource; (iv) an identifier of the device type having the available resource (e.g. phone/tablet/computer/watch, and/or in some examples an indication of a brand or model of the device); (v) details of how much of a particular resource is available (e.g. an amount of screen available, which hardware components are available and/or an amount of compute power available); (vi) identification of any intermediaries in making the resource available, or the like.

In some examples, the approach described herein may be applied in relation to computing device resource associated with a particular identifier, or wherein the identifier matches predetermined criteria. In other words, the mean utilisation rate may be determined on a per-identifier basis. In some examples, the mean utilisation rate may be a rate for utilising resource for processing a particular type of data, data content or data payload as requested by a particular resource providing entity. In some examples, the mean utilisation rate may be determined on a per-identifier basis and/or a per-first entity basis. In still other words, available resource and/or reports of utilisation of resource may be filtered based on their identifier meeting predetermined criteria before the mean utilisation rate is determined therefrom. In some examples, first criteria may be applied in relation to an identifier associated with resource utilisation and second criteria may be applied in relation to an identifier associated with an offer of a resource.

The resource matching platform 100 monitors the received notifications of resource utilisation and uses these to determine a suitable monitoring window and associated mean utilisation rate, as described above. This in turn is used to determine a suitable offer rate. For example, this may be determined as being at least a minimum offer rate, and at most offer of all identified available resource. In some examples, a throttle rate may be applied as described above. Offers of available resource may be sent to the first entity based on the determined offer rate.

The first entity 300 may review the offers and determine if the resource described therein are of potential utility, for example based on the identifier or key. If so, the first entity 300 may request use of the resource. Thus, the platform facilitates matching of resources to resource seeking first entity by making the offer. The request may be sent to the resource matching platform 100, which may in turn send a request for use of the resource by the first entity 300 to the second entity 302. If the second entity 302 accepts the request, then the resource may be requested on behalf of the first entity 300 by the resource allocation module 304 of the resource matching platform 100. In some examples, the first entity 300 may hold data which is to be processed or output by the second entity 302, and this may be sent to the second entity 302 directly from the first entity 300, or via the resource matching platform 100. For example, the resource allocation module 302 may receive data (e.g. a payload) from the first entity 300, and send the data to the second entity 304 providing the computing device resource to be utilised, wherein the data (payload) is to be processed by the second entity 304 in utilising the computing device resource.

While in this example there is a single first entity 300 and a plurality of second entities 302a-e, in other examples, there may be a plurality of first entities 300 and a single second entity 302, or a plurality of first entities 300 and a plurality of second entities 302a-e. For example, the offer module 106 may be configured to offer the resource to a plurality of first entities and, if more than one of the plurality of entities request the resource, the resource allocation module 304 may be configured to select an entity of the plurality of entities and to request allocation of the resource to the selected resource requesting first entity. Any criteria may be used to determine which resource requesting entity is selected in this context.

For example, this may be determined randomly, or based on an offer to pay for access to resource (for example, a first entity which makes a higher offer may be selected over a different first entity which makes a lower offer), according to predetermined rules or in some other way.

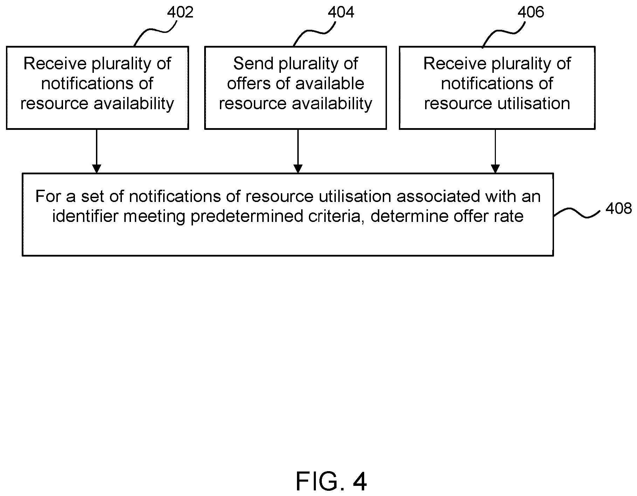

Figure 4 shows an example of a method which may be used in some examples. The method may be carried out by processing circuitry, for example by processing circuitry 102 as described in relation to Figure 1 or Figure 3 above.

Block 402 comprises receiving a plurality of notifications of resource availability, each notification comprising an identifier. These are indicative of available resource, and may be received from one or more resource providing entity, such as the resource providing second entities 302 discussed in relation to Figure 3.

The identifier may comprise any or any combination of (i) a context of the available resource utilisation (e.g. whether the resource is available in the context of a particular software application, in the context of a particular web based facility or web page, or by particular hardware, or the like); (ii) a location of a device having the available resource (e.g. a country, city, region or the like); (iii) an identifier of the device having the available resource; (iv) an identifier of the device type having the available resource (e.g. phone/tablet/computer/watch, and/or in some examples an indication of a brand or model of the device); (v) details of how much of a particular resource is available (e.g. an amount of screen available, which hardware components are available and/or an amount of compute power available); (vi) identification of any intermediaries in making the resource available, or the like.

In block 404, a plurality of offers of resources are made. The offers may be offers of at least a subset of the resources identified in the notifications received in block 402, for example based on a current or a default offer rate. Such a default offer rate may be utilised at the start of the method. In some examples, these may be made to an entity, such as the first entity 300 in Figure 3. Each offer may include an identifier, which may comprise the received identifier discussed in relation to block 402, or an identifier based thereon.

In block 406, a plurality of notifications of resource utilisation are received, each notification comprising an identifier. The identifier (which may be referred to as a 'key' in some examples) may encode any or any combination of: (i) a context of resource utilisation (e.g. was the resource utilised in the context of a particular software application, in the context of a particular web based facility or web page, or by particular hardware, or the like); (ii) a location of a device providing the resource (e.g. a country, city, region or the like); (iii) an identifier of the device which provided the resource; (iv) an identifier of the device type that provided the resource (e.g. phone/tablet/computer/watch, and/or in some examples an indication of a brand or model of the device); (v) details of how the particular resource was provided (e.g. an amount of screen utilised, which hardware components may have been used and/or an amount of compute power used); (vi) details of the data provided for use in resource utilisation (e.g. as provided by a resource requesting entity); (vii) time of resource usage; (viii) identification of the entity utilising the resource, (ix) identification of any intermediaries in allocating the resource; (x) identification of any decision making entities involved in allocating the resource; or the like.

The notifications of resource utilisation may be received, directly and/or via at least one intermediary, from one or more resource providing entity, such as the resource providing second entities 302 discussed in relation to Figure 3, and may indicate that a resource providing entity has provided a particular resource to another entity (e.g. a resource requesting entity, such as the first entity 300 discussed in relation to Figure 3). The resource providing entity and/or the resource requesting entity may comprise computing devices.

It will be appreciated that blocks 402, 404 and 406 may be carried out over time, and/or at least partially concurrently, and/or while the method continues to be performed.

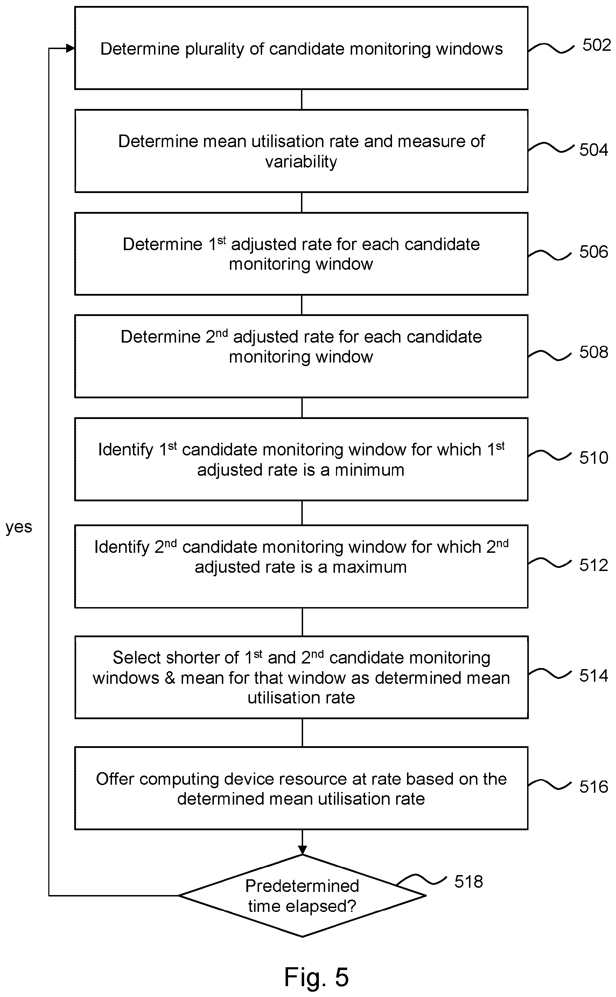

Block 408 comprises, for a set of notifications of resource utilisation associated with an identifier meeting predetermined criteria (which may be the same identifier, or identifiers which match to an extent which indicates that the resource advertised, offered and/or utilised have particular and/or predetermined common features), determining an offer rate. Block 408 may comprise determining an offer rate based on resources/resource utilisation notifications associated with identifiers which match particular criteria. In one example, the criteria may comprise (i) details of the data provided for use in resource utilisation (e.g. as provided by a resource requesting entity); and (ii) identification of the entity utilising the resource, such that utilisation events relating to the same data, or data type, and the same resource requesting entity may be identified, and an offer rate may be determined in relation thereto. Additional criteria may be applied in other examples. The offer rate may be determined as described in relation to Figure 1 or 2 above, for example based on a mean utilisation rate as described above and/as described in relation Figure 5.

Figure 5 shows an example of a method which may be executed by processing circuitry. In some examples, the method may be executed by the processing circuitry 102 of the resource matching platform 100 described above. The method comprises an example of a method of carrying out block 408 of Figure 4.

The method comprises, in block 502, determining a plurality of candidate monitoring windows, the candidate monitoring windows comprising different periods of time during which a computing device resource may be utilised by a resource requesting entity. As described above, the plurality of candidate monitoring windows comprise a plurality of time windows having a common end time and different start times.

The method further comprises, in block 504, determining both (i) a mean utilisation rate and (ii) a measure of variability of the utilisation rate for each of a plurality of candidate monitoring windows, the mean utilisation rate comprising a mean rate at which computing device resource is utilised in a monitoring window. The measure of variability may for example comprise a variation, a standard deviation or in particular examples, a standard error. The mean utilisation rate may be defined as the number of times resource(s) was/were used in the monitoring window (resource allocation events) divided by the number of offers of resource received by the resource requesting entity in that window. The resource allocation events and/or the number of offers of resource may be determined in relation to resource allocation events and/or available resource which each match predetermined criteria. The criteria may be the same, or partially overlapping, or different.

Block 506 comprises determining, for each of the plurality of candidate monitoring windows, a first adjusted rate, wherein the first adjusted rate comprises the mean utilisation rate for that candidate monitoring window plus the measure of variability for that candidate monitoring window.

Block 508 comprises determining, for each of the plurality of candidate monitoring windows, a second adjusted rate, wherein the second adjusted rate comprises the mean utilisation rate for that candidate monitoring window minus the measure of variability for that candidate monitoring window.

In block 510, a first candidate monitoring window of the plurality of candidate monitoring windows is identified, wherein the first candidate monitoring window is the candidate monitoring window for which the first adjusted rate is at a minimum.

In block 512, a second candidate monitoring window of the plurality of candidate monitoring windows is identified, wherein the second candidate monitoring window is the candidate monitoring window for which the second adjusted rate is at a maximum.

Block 514 comprises selecting the shorter of the first and second candidate monitoring window as the monitoring window and the mean utilisation rate for that window as a determined current mean utilisation rate for the resource requesting entity If the candidate monitoring windows identified in block 510 or 512 are the same, then that window may be selected. If it is determined in block 510 or 512 that two windows share the same maximum/minimum value as applicable, then the shorter window may be selected. If there is no other identified maximum/minimum value, then the longest monitoring window may be selected.

The method further comprises, in block 516, offering a computing device resource to the entity at a rate based, at least in part, on the determined mean utilisation rate for the entity. As described above, in some examples, this determination may be subject to a minimum offer rate, for example when the determined mean utilisation rate is below a threshold. Moreover, there may be a maximum offer rate, for example when the determined mean utilisation rate is above a threshold. The maximum offer rate may reflect identified available computing device resource, or identified available computing device resource meeting predetermined criteria. In some examples, computing device resource may be offered at a rate which is proportional to the determined mean utilisation rate for at least some determined mean utilisation rates. In some examples, computing device resource may be offered at an offer rate determined as the higher of (i) a predetermined minimum offer rate; (ii) a determined offer rate based on a ratio of the mean utilisation rate multiplied by the number of offers sent in the monitoring window and by a scaling factor to the available resource, up to the maximum offer rate. As discussed above, the scaling factor, i.e. the ratio between the offer rate and the determined mean utilisation rate may be predetermined by the resource requesting (or offer receiving) entity.

In some examples, the offer rate is determined as a throttle rate applied to the available resource, wherein the throttle rate comprises the lower of (i) a predetermined maximum throttle rate and (ii) a determined throttle rate comprising:

$$1 - \frac{mean\ utilsation\ rate * offers\_sent * n}{available\ resource}$$

wherein n comprises a predetermined factor, offers_sent is the number of offers sent in the monitoring window selected in block 514 and available resource represents the number of offers which could have been sent, if all available resource was offered. n may be an integer or a non-integer.

In block 518, it is determined if a predetermined time period has elapsed. This may for example comprise a time period since the method was commenced, an offer rate was adopted, or since a common end point of the plurality of candidate monitoring windows. If or once the predetermined period has elapsed, the method then loops back to block 502. In this way the method may be carried out periodically, for example every minute, every 10 minutes, every 30 mins, every hour, once a day, once a week or the like. The period may for example be determined based on a variability of use of a resource. If the use is stable over long periods, then a less frequent iteration rate may be appropriate.

The method may for example run until terminated by a user, or for a predetermined time period or number of iterations or the like.

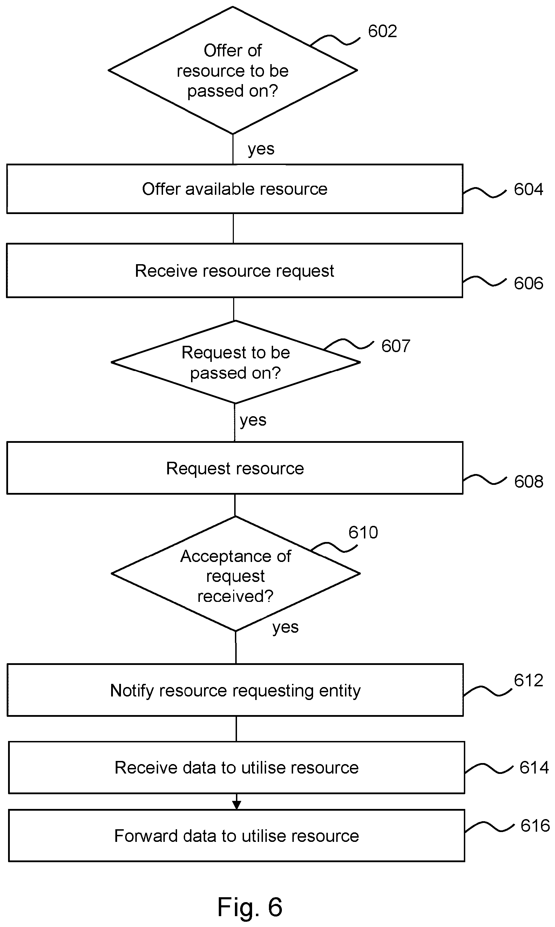

Figure 6 is an example of a method for providing offers of available resource to a resource requesting entity, and allocation of resource to that entity. The method of Figure 6 may be carried out by processing circuitry, for example the processing circuitry 102 as described in Figure 1 or 3.

In some examples, the method of Figure 6 may be carried out following the method of Figure 5.

Block 602 comprises determining whether to make an offer of an available resource to a resource requesting entity. Such an offer may be an offer of at least one resource of the received notifications of resource availability discussed in relation to block 402 and/or may be an offer as discussed in relation to block 404.

In order to determine whether to forward the offer, an offer rate for the resource requesting entity and for the category of resource as determined from an identifier (for example as determined using the method of Figure 5) may be looked up. For example, for offers associated with identifiers which match predetermined criteria, a throttle rate associated with that criteria for the resource requesting entity may be applied as a probability of passing on the offer of the resource, for example using a random number generator. If the offer is to be passed on, it is passed on in block 604. A record (e.g. a count) may be kept of all offers passed on.

In this example, it is assumed that the resource requesting entity wishes to utilise the resource which is the subject of an offer, and block 606 comprises receiving a resource request directly or indirectly from the resource requesting entity in response to the offer. In some examples, the resource request may be associated with an identifier which may be compared to predetermined criteria, (which may be the same criteria applied in relation to block 408 and/or 602).

In block 607, it is determined whether to pass the resource request on. While in some examples all requests may be passed on, in other examples, the request may be evaluated before it is passed on, and/or it may be determined whether the resource is still available. For example, in some examples, the same resource may have been offered to multiple resource requesting entities which request utilisation of the resource, and one of these may be selected. Any criteria may be used to determine which resource requesting entity is selected in this context. For example, this may be determined randomly, or based on an offer to pay for access to resource (for example, an entity which makes a higher offer may be selected over an entity which makes a lower offer), according to predetermined rules or in some other way. If the request is not to be passed on, the method for that request may terminate.

Assuming the request is to be passed on, the method proceeds to block 608 which comprises making a request (either directly or indirectly, e.g. via at least one intermediate entity) to a resource providing entity. In block 610, it is determined if an acceptance of the request is provided (although this may not be the case in all examples, for example where the resource has been or is to be allocated to another entity). If it is determined that the request is accepted, in block 612, the resource requesting entity is notified that the resource is available. If the request is not accepted, the method for that request may terminate. In block 614, the data which is to utilise the resource is received from the resource requesting entity (e.g. to be displayed, or to be processed by, the resource providing entity or the like) and, in block 616, this data is forwarded to the resource providing entity. Assuming the requested utilisation of the resource is successful, this may then result in a notification of resource utilisation as described in relation to block 406.

While the methods of Figure 4, 5 and 6 are described in relation to identifiers meeting particular criteria, it will be appreciated that the method(s) may be carried out concurrently for identifiers matching other criteria, such that available resource may be matched to entities seeking use of the resource based on criteria such as resource/device type, location or the like. In addition, while the method of Figure 6 is described in relation to a single resource requesting entity, it will be appreciated that the method may be carried out concurrently for a plurality of resource requesting entities.

Moreover, while the method of Figure 6 may be carried out by the same processing circuitry as carries out the method of Figure 4 and/or Figure 5, these could be different entities. For example, at least one type of notification described in relation to Figure 4 may be received at an entity other than the resource matching platform 100. For example, a resource matching platform 100 may communicate with the resource providing entity/entities and/or the resource requesting entity/entities via at least one intermediary.

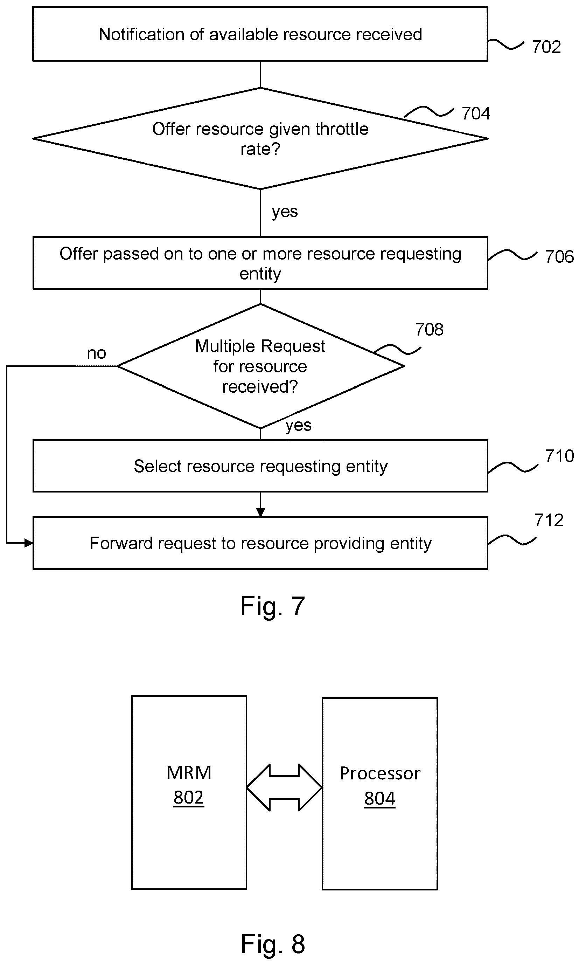

Figure 7 is another example of a method, in this example for providing offers of an available resource to a plurality of resource requesting entities, and requesting allocation of resource to a particular entity. The method may be carried out by processing circuitry, for example by processing circuitry 102 as described in relation to Figure 1 or Figure 3 above. The method assumes that an offer rate (in this example, a throttle rate) has been determined for each of a plurality of resource requesting entities, for example as described in relation to Figure 5. In some examples, an offer rate may have been determined for at least one category of resource, wherein the category of resource may be determined using an identifier.

In block 702, a notification of resource availability is received from a resource providing entity, such as a resource providing second entity 302a-e discussed in relation to Figure 3. In this example, the notification comprises an identifier, for example as discussed in relation to block 402 of Figure 4. The notification may be received directly from the resource providing entity or via one or more intermediaries.

Block 704 comprises determining if an offer of the resource is to be made to each of a plurality of resource requesting entities. For example, this may be based on an offer rate (in this example a throttle rate) for that entity and in some examples on an offer rate based on each resource requesting entity's usage of the category of resource which is available.

For example, the offer rate may be associated with a probability that an offer will be passed on in order to meet a target offer rate. In some examples, block 704 may comprise generating a random number in association with the offer and offering the resource if the random number generated meets a threshold set for that particular resource requesting entity/resource category based on the target offer rate. In other examples, a random number may be generated in respect of each resource requesting entity to which the offer may be sent. In this way, the same offer may be made to a plurality of resource requesting entities in block 706.

In block 708, it is determined if multiple requests for the offered resource are received and, if so, in block 710, one of the resource requesting entities is selected. For example, this may be determined randomly, or based on an offer to pay for access to a resource (for example, an entity which makes a higher offer may be selected over an entity which makes a lower offer), according to predetermined rules or in some other way.

If only one request is received, or once the resource requesting entity is selected, the method progresses to block 710, and the request is passed to the resource providing entity in block 712, either directly or via one or more intermediary. The request may for example be accompanied by data to utilise the request (for example as described in relation to block 616 of Figure 6).

Assuming the requested utilisation of the resource is successful, this may then result in a notification of resource utilisation, for example as described in relation to block 406. The method of Figure 7 may for example further comprise any or any combination of blocks 610-612, and/or any of the blocks of Figure 5 to determine the offer rate.

While the method of Figure 7 may be carried out by the same processing circuitry as carries out the method of Figure 4, 5 and/or Figure 6, these could be different entities. For example, at least one type of notification described in relation to Figure 4 may be received at an entity other than the resource matching platform 100. For example, a resource matching platform 100 may communicate with the resource providing entity/entities and/or the resource requesting entity/entities via at least one intermediary.

Figure 8 shows an example of a non-transitory machine-readable medium 802 associated with a processor 804 (or more generally processing circuitry). The machine readable medium 802 is encoded with instructions which, when executed, cause the processor 804 to carry out at least one block of the methods described herein in relation to Figure 4, 5, 6 or 7, or to act as the resource matching platform 100, or any module 104, 106, 304 described in relation to Figure 1, 2 or 3.

Any logic or application described herein that comprises software or code can be embodied in any non-transitory machine- readable or computer-readable medium for use by or in connection with an instruction execution system (e.g. one or more processors) in a computer system or other system. In this sense, the logic may comprise, for example, statements including instructions and declarations that can be fetched from the computer-readable medium and can be executed by the instruction execution system. In the context of the present disclosure, a machine-readable medium or computer-readable medium can be any medium that can contain, store, or update the logic or application described herein for use by or in connection with the instruction execution system. For example, the machine-readable medium or computer-readable medium may comprise one or more of random access memory (RAM), read-only memory (ROM), hard disk drive, solid-state drive, USB flash drive, memory card, floppy disk, optical disc such as compact disc (CD) or digital versatile disc (DVD), magnetic tape, and other memory components. For example, the RAM may comprise one or more of static random access memory (SRAM), dynamic random access memory (DRAM), magnetic random access memory (MRAM), and other forms of RAM. For example, the ROM may comprise one or more of programmable read-only memory (PROM), erasable programmable read-only memory (EPROM), electrically erasable programmable read-only memory (EEPROM), and other forms of ROM.

While the above representative embodiments have been described with certain components in exemplary configurations, it will be understood by one of ordinary skill in the art that other representative embodiments can be implemented using different configurations and/or different components. For example, it will be understood by one of ordinary skill in the art that the order of certain steps and certain components can be altered without substantially impairing the functioning of the invention.

The representative embodiments and disclosed subject matter, which have been described in detail herein, have been presented by way of example and illustration and not by way of limitation. It will be understood by those skilled in the art that various changes may be made in the form and details of the described embodiments resulting in equivalent embodiments that remain within the scope of the invention.

**Claims**

1. A resource matching platform (100) comprising processing circuitry (102), the processing circuitry (102) comprising:

   a monitoring module (104) configured to periodically determine a mean utilisation rate, wherein the mean utilisation rate comprises a rate at which computing device resource is utilised by an entity; and
   an offer module (106) configured to offer computing device resource to the entity, wherein the offer module (106) is further configured to adapt a rate at which computing device resource is offered to the entity based on a current determined mean utilisation rate for the entity;
   wherein the monitoring module (106) is configured to determine the mean utilisation rate by:

determining (i) a mean utilisation rate and (ii) a measure of variability of the utilisation rate for each of a plurality of candidate monitoring windows, wherein the candidate monitoring windows comprise a plurality of time windows having a common end time and different start times;

determining, for each of the plurality of candidate monitoring windows, a first adjusted rate, wherein the first adjusted rate comprises the mean utilisation rate for that candidate monitoring window plus the measure of variability for that candidate monitoring window;

determining, for each of the plurality of candidate monitoring windows, a second adjusted rate, wherein the second adjusted rate comprises the mean utilisation rate for that candidate monitoring window minus the measure of variability for that candidate monitoring window;

identifying a first candidate monitoring window of the plurality of candidate monitoring windows, wherein the first candidate monitoring window is the candidate monitoring window for which the first adjusted rate is at a minimum;

identifying a second candidate monitoring window of the plurality of candidate monitoring windows, wherein the second candidate monitoring window is the candidate monitoring window for which the second adjusted rate is at a maximum;

selecting the shorter of the first and second candidate monitoring window as the monitoring window; and determining the mean utilisation rate for that window as the determined mean utilisation rate for the entity.

2. The resource matching platform (100) of claim 1, wherein the offer module (106) is configured to offer computing device resource at a minimum offer rate when the determined mean utilisation rate is below a threshold.

3. The resource matching platform (100) of any preceding claim, wherein the offer module (106) is configured to offer computing device resource at a maximum offer rate when the determined mean utilisation rate is above a threshold.

4. The resource matching platform (100) of any preceding claim, wherein, for at least some determined mean utilisation rates, the offer module (106) is configured to offer computing device resource at a rate which is proportional to the determined mean utilisation rate, wherein a ratio between the offer rate and the determined mean utilisation rate may be predetermined by the entity.

5. The resource matching platform (100) of claim 1, wherein the offer rate is determined as the higher of (i) a predetermined minimum offer rate and (ii) a determined offer rate determined based on the mean utilisation rate and the available resource.

6. The resource matching platform (100) of claim 1, wherein the offer rate is a throttle rate applied to the available computing device resource, wherein the throttle rate comprises the lower of (i) a predetermined maximum throttle rate and (ii) a determined throttle rate comprising:

$$1 - \frac{mean\ utilsation\ rate * offers\_sent * n}{available\ resource}$$

wherein n comprises a predetermined factor and offers_sent comprises the number of offers sent in the selected candidate monitoring window.

7. The resource matching platform (100) of any preceding claim wherein the monitoring module (104) is further configured to monitor a utilisation rate over time and to determine the mean utilisation rate therefrom, and wherein monitoring the utilisation rate comprises:

receiving a plurality of notifications of resource utilisation, each notification comprising an identifier.

8. The resource matching platform (100) of any preceding claim wherein the monitoring module (104) is further configured to identify available resource, and where the offers comprise offers of identified available resource.

9. The resource matching platform (100) of any preceding claim wherein the offer module (106) is further configured to include, in the offer, details of the available computing device resource.

10. The resource matching platform (100) of any preceding claim, wherein the offer module (106) is configured to receive details of an available resource of at least one computing device, and the offers comprise an offer of the available resource.

11. The resource matching platform (100) of any preceding claim, further comprising a resource allocation module (304) configured to, when an offer of computing device resource is accepted by an entity, allocate or request allocation of the offered computing device resource to the entity.

12. The resource matching platform (100) of claim 11, wherein the resource allocation module (304) is further configured to receive data from the entity and to send the data to the computing device providing the offered computing device resource, wherein the data is to be processed by the computing device in utilising the offered computing device resource.

13. The resource matching platform (100) of claim 11 or 12, wherein the offer module (106) is configured to offer the same computing device resource to a plurality of entities and, if more than one of the plurality of entities request that offered computing device resource, the resource allocation module (304) is to select an entity of the plurality of entities and to request allocation of the offered computing device resource to the selected entity.

14. The resource matching platform (100) of any preceding claim wherein the measure of variability comprises a standard error.

15. A method of resource matching comprising, by processing circuitry:

   determining (502) a plurality of candidate monitoring windows, the candidate monitoring windows comprising different periods of time during which computing device resource is utilised by an entity, wherein the candidate monitoring windows have a common end time and different start times.;
   determining (504), for each of the plurality of candidate monitoring windows, (i) a mean utilisation rate and (ii) a measure of variability of the utilisation rate, the mean utilisation rate comprising a mean rate at which computing device resource is utilised by the entity in a monitoring window;
   determining (506), for each of the plurality of candidate monitoring windows, a first adjusted rate, wherein the first adjusted rate comprises the mean utilisation rate for that candidate monitoring window plus the measure of variability for that candidate monitoring window;
   determining (508), for each of the plurality of candidate monitoring windows, a second adjusted rate, wherein the second adjusted rate comprises the mean utilisation rate for that candidate monitoring window minus the measure of variability for that candidate monitoring window;
   identifying (510) a first candidate monitoring window of the plurality of candidate monitoring windows, wherein the first candidate monitoring window is the candidate monitoring window for which the first adjusted rate is at a minimum;
   identifying (512) a second candidate monitoring window of the plurality of candidate monitoring windows, wherein the second candidate monitoring window is the candidate monitoring window for which the second adjusted rate is at a maximum;
   selecting (514) the shorter of the first and second candidate monitoring window as the monitoring window and the mean utilisation rate for that window as a determined mean utilisation rate for the entity;
   offering (516) a computing device resource to the entity at a rate based on the determined mean utilisation rate;
   wherein the mean utilisation rate and the rate at which computing device resource are offered are determined on a periodic basis.

16. The method of claim 15, comprising offering computing device resource at a minimum offer rate when the determined mean utilisation rate is below a threshold.

17. The method of claim 15, comprising offering computing device resource at a maximum offer rate when the determined mean utilisation rate is above a threshold.

18. The method of any of claims 15 to 17 comprising, for at least some determined mean utilisation rates, offering computing device resource at a rate which is proportional to the determined mean utilisation rate.

19. The method of claim 15 or 18, comprising offering computing device resource at an offer rate determined as the higher of (i) a predetermined minimum offer rate and (ii) a determined offer rate determined based on the mean utilisation rate and the available resource.

20. The method of claim 15, wherein the offer rate is determined as a throttle rate applied to the available resource, wherein the throttle rate comprises the lower of (i) a predetermined maximum throttle rate and (ii) a determined throttle rate comprising:

$$1 - \frac{mean\ utilsation\ rate * offers\_sent * n}{available\ resource}$$

wherein n comprises a predetermined factor and offers_sent comprises the number of offers sent in the selected candidate monitoring window.

21. The method of any of claims 15 to 20 further comprising receiving a plurality of notifications of computing device resource utilisation events, each notification comprising an identifier and wherein the utilisation rates are determined based on the received notifications.

22. The method of claim 21, wherein the utilisation rates are determined in relation to notifications of computing device resource utilisation events matching predetermined criteria.

23. The method of any of claims 15 to 22, comprising receiving (402) a plurality of notifications of computing device resource availability from at least one computing device providing computing device resource, each notification comprising an identifier.

24. The method of claim 23, wherein offers comprise offers of available computing device resource identified by the received notifications of computing device resource availability.

25. The method of any of claims 15 to 24, comprising receiving (606) a resource request in response to at least one of the offers, and passing (706) the resource request to a computing device providing the requested computing device resource.

26. The method of any of claims 15 to 25, comprising:

   determining a mean utilisation rate for each of a plurality of entities;
   offering computing device resource to each entity at a rate based on the determined mean utilisation rate for that entity;
   receiving a plurality of resource requests in response to at least one of the offers;
   selecting (710) one of the requests; and
   passing (712) the selected resource request to a computing device providing the requested computing device resource.

27. The method of claim 25 or 26, further comprising receiving an acceptance of a resource request from the computing device providing the requested computing device resource.

28. The method of any of claims 15 to 27, comprising determining a mean utilisation rate for a category of resource, wherein resources are categorised based on an identifier associated therewith; and
   offering computing device resource to the entity at a rate based on the determined mean utilisation rate for computing device resource in the same category of resources.

29. The method of any of claims 15 to 28, further comprising, when an offer for a resource is accepted by at least one computing device providing that computing device resource, allocating that computing device resource to the computing device.

30. The method of claim 29, further comprising receiving (614) data from the entity and sending (616) the data to the computing device providing that computing device resource, wherein the data is to be processed by the computing device providing that computing device resource in utilising that computing device resource

31. A non-transitory machine readable medium (802) encoded with instructions which, when executed by a processing circuitry, cause the processing circuitry to carry out the method of any of claims 15 to 30.

**Patentansprüche**

1. Ressourcenabgleichsplattform (100), umfassend eine Verarbeitungsschaltung (102), wobei die Verarbeitungsschaltung (102) umfasst:

   ein Überwachungsmodul (104), das konfiguriert ist, periodisch eine mittlere Nutzungsrate zu bestimmen, wobei die mittlere Nutzungsrate eine Rate umfasst, mit der Rechnervorrichtungsressource durch eine Entität genutzt wird; und
   ein Angebotsmodul (106), das konfiguriert ist, der Entität Rechnervorrichtungsressource anzubieten, wobei das Angebotsmodul (106) ferner konfiguriert ist, eine Rate, mit der der Entität Rechnervorrichtungsressource angeboten wird, basierend auf einer aktuellen bestimmten mittleren Nutzungsrate für die Entität anzupassen; wobei das Überwachungsmodul (104) konfiguriert ist, die mittlere Nutzungsrate zu bestimmen durch:

   Bestimmen (i) einer mittleren Nutzungsrate und (ii) eines Variabilitätsmaßes der Nutzungsrate für jedes einer Vielzahl von Kandidaten-Überwachungsfenstern, wobei die Kandidaten-Überwachungsfenster eine Vielzahl von Zeitfenstern umfassen, die eine gemeinsame Endzeit und unterschiedliche Startzeiten aufweisen;
   Bestimmen, für jedes der Vielzahl von Kandidaten-Überwachungsfenstern, einer ersten angepassten Rate, wobei die erste angepasste Rate die mittlere Nutzungsrate für jenes Kandidaten-Überwachungsfenster plus das Variabilitätsmaß für jenes Kandidaten-Überwachungsfenster umfasst;
   Bestimmen, für jedes der Vielzahl von Kandidaten-Überwachungsfenstern, einer zweiten angepassten Rate, wobei die zweite angepasste Rate die mittlere Nutzungsrate für jenes Kandidaten-Überwachungsfenster minus das Variabilitätsmaß für jenes Kandidaten-Überwachungsfenster umfasst;
   Identifizieren eines ersten Kandidaten-Überwachungsfensters der Vielzahl von Kandidaten-Überwachungsfenstern, wobei das erste Kandidaten-Überwachungsfenster das Kandidaten-Überwachungsfenster ist, für das die erste angepasste Rate bei einem Minimum liegt;
   Identifizieren eines zweiten Kandidaten-Überwachungsfensters der Vielzahl von Kandidaten-Überwachungsfenstern, wobei das zweite Kandidaten-Überwachungsfenster das Kandidaten-Überwachungsfenster ist, für das die zweite angepasste Rate bei einem Maximum liegt;
   Auswählen des kürzeren des ersten und des zweiten Kandidaten-Überwachungsfensters als das Überwachungsfenster; und
   Bestimmen der mittleren Nutzungsrate für jenes Fenster als die bestimmte mittlere Nutzungsrate für die Entität.

2. Ressourcenabgleichsplattform (100) nach Anspruch 1, wobei das Angebotsmodul (106) konfiguriert ist, Rechnervorrichtungsressource mit einer minimalen Angebotsrate anzubieten, wenn die bestimmte mittlere Nutzungsrate unter einem Schwellenwert liegt.

3. Ressourcenabgleichsplattform (100) nach einem der vorhergehenden Ansprüche, wobei das Angebotsmodul (106) konfiguriert ist, Rechnervorrichtungsressource mit einer maximalen Angebotsrate anzubieten, wenn die bestimmte mittlere Nutzungsrate über einem Schwellenwert liegt.

4. Ressourcenabgleichsplattform (100) nach einem der vorhergehenden Ansprüche, wobei das Angebotsmodul (106) für mindestens einige bestimmte mittlere Nutzungsraten konfiguriert ist, Rechnervorrichtungsressource mit einer Rate anzubieten, die proportional zu der bestimmten mittleren Nutzungsrate ist, wobei ein Verhältnis zwischen der Angebotsrate und der bestimmten mittleren Nutzungsrate durch die Entität vorbestimmt sein kann.

5. Ressourcenabgleichsplattform (100) nach Anspruch 1, wobei die Angebotsrate bestimmt wird als die höhere von (i) einer vorbestimmten minimalen Angebotsrate und (ii) einer bestimmten Angebotsrate, die basierend auf der mittleren Nutzungsrate und der verfügbaren Ressource bestimmt wird.

6. Ressourcenabgleichsplattform (100) nach Anspruch 1, wobei die Angebotsrate eine Drosselungsrate ist, die auf die verfügbare Rechnervorrichtungsressource angewendet wird, wobei die Drosselungsrate die niedrigere umfasst von (i) einer vorbestimmten maximalen Drosselungsrate und (ii) einer bestimmten Drosselungsrate, die Folgendes umfasst:

$$1 - \frac{mittlere\ Nutzungsrate\ *\ offers\_sent\ *\ n}{verf\ddot{u}gbare\ Ressource}$$

wobei n einen vorbestimmten Faktor umfasst und offers_sent die Anzahl von in dem ausgewählten Kandidaten-Überwachungsfenster gesendeten Angeboten umfasst.

7. Ressourcenabgleichsplattform (100) nach einem der vorhergehenden Ansprüche, wobei das Überwachungsmodul (104) ferner konfiguriert ist, eine Nutzungsrate über die Zeit zu überwachen und daraus die mittlere Nutzungsrate zu bestimmen, und wobei das Überwachen der Nutzungsrate umfasst:
Empfangen einer Vielzahl von Benachrichtigungen über Ressourcennutzung, wobei jede Benachrichtigung einen Identifikator umfasst.

8. Ressourcenabgleichsplattform (100) nach einem der vorhergehenden Ansprüche, wobei das Überwachungsmodul (104) ferner konfiguriert ist, verfügbare Ressource zu identifizieren, und wobei die Angebote Angebote von identifizierter verfügbarer Ressource umfassen.

9. Ressourcenabgleichsplattform (100) nach einem der vorhergehenden Ansprüche, wobei das Angebotsmodul (106) ferner konfiguriert ist, in das Angebot Details der verfügbaren Rechnervorrichtungsressource einzuschließen.

10. Ressourcenabgleichsplattform (100) nach einem der vorhergehenden Ansprüche, wobei das Angebotsmodul (106) konfiguriert ist, Details einer verfügbaren Ressource mindestens einer Rechnervorrichtung zu empfangen, und die Angebote ein Angebot der verfügbaren Ressource umfassen.

11. Ressourcenabgleichsplattform (100) nach einem der vorhergehenden Ansprüche, ferner umfassend ein Ressourcenzuweisungsmodul (304), das konfiguriert ist, wenn ein Angebot von Rechnervorrichtungsressource durch eine Entität akzeptiert wird, die angebotene Rechnervorrichtungsressource der Entität zuzuweisen oder deren Zuweisung anzufordern.

12. Ressourcenabgleichsplattform (100) nach Anspruch 11, wobei das Ressourcenzuweisungsmodul (304) ferner konfiguriert ist, Daten von der Entität zu empfangen und die Daten an die Rechnervorrichtung zu senden, die die angebotene Rechnervorrichtungsressource bereitstellt, wobei die Daten durch die Rechnervorrichtung beim Nutzen der angebotenen Rechnervorrichtungsressource zu verarbeiten sind.

13. Ressourcenabgleichsplattform (100) nach Anspruch 11 oder 12, wobei das Angebotsmodul (106) konfiguriert ist, die gleiche Rechnervorrichtungsressource einer Vielzahl von Entitäten anzubieten, und, wenn mehr als eine der Vielzahl von Entitäten jene angebotene Rechnervorrichtungsressource anfordert, das Ressourcenzuweisungsmodul (304) eine Entität der Vielzahl von Entitäten auswählen soll und die Zuweisung der angebotenen Rechnervorrichtungsressource an die ausgewählte Entität anfordern soll.

14. Ressourcenabgleichsplattform (100) nach einem der vorhergehenden Ansprüche, wobei das Variabilitätsmaß einen Standardfehler umfasst.

15. Verfahren zum Ressourcenabgleich, umfassend, durch eine Verarbeitungsschaltung:

Bestimmen (502) einer Vielzahl von Kandidaten-Überwachungsfenstern, wobei die Kandidaten-Überwachungsfenster unterschiedliche Zeiträume umfassen, während derer Rechnervorrichtungsressource durch eine Entität genutzt wird, wobei die Kandidaten-Überwachungsfenster eine gemeinsame Endzeit und unterschiedliche Startzeiten aufweisen;
Bestimmen (504), für jedes der Vielzahl von Kandidaten-Überwachungsfenstern, (i) einer mittleren Nutzungsrate und (ii) eines Variabilitätsmaßes der Nutzungsrate, wobei die mittlere Nutzungsrate eine mittlere Rate umfasst, mit der Rechnervorrichtungsressource durch die Entität in einem Überwachungsfenster genutzt wird;
Bestimmen (506), für jedes der Vielzahl von Kandidaten-Überwachungsfenstern, einer ersten angepassten Rate, wobei die erste angepasste Rate die mittlere Nutzungsrate für jenes Kandidaten-Überwachungsfenster plus das Variabilitätsmaß für jenes Kandidaten-Überwachungsfenster umfasst;
Bestimmen (508), für jedes der Vielzahl von Kandidaten-Überwachungsfenstern, einer zweiten angepassten Rate, wobei die zweite angepasste Rate die mittlere Nutzungsrate für jenes Kandidaten-Überwachungsfenster minus das Variabilitätsmaß für jenes Kandidaten-Überwachungsfenster umfasst;
Identifizieren (510) eines ersten Kandidaten-Überwachungsfensters der Vielzahl von Kandidaten-Überwachungsfenstern, wobei das erste Kandidaten-Überwachungsfenster das Kandidaten-Überwachungsfenster ist, für das die erste angepasste Rate bei einem Minimum liegt;
Identifizieren (512) eines zweiten Kandidaten-Überwachungsfensters der Vielzahl von Kandidaten-Überwachungsfenstern, wobei das zweite Kandidaten-Überwachungsfenster das Kandidaten-Überwachungsfenster ist, für das die zweite angepasste Rate bei einem Maximum liegt;

Auswählen (514) des kürzeren des ersten und des zweiten Kandidaten-Überwachungsfensters als das Überwachungsfenster und der mittleren Nutzungsrate für jenes Fenster als eine bestimmte mittlere Nutzungsrate für die Entität;

Anbieten (516) einer Rechnervorrichtungsressource an die Entität mit einer Rate, die auf der bestimmten mittleren Nutzungsrate basiert;

wobei die mittlere Nutzungsrate und die Rate, mit der Rechnervorrichtungsressource angeboten wird, auf einer periodischen Basis bestimmt werden.

16. Verfahren nach Anspruch 15, umfassend das Anbieten von Rechnervorrichtungsressource mit einer minimalen Angebotsrate, wenn die bestimmte mittlere Nutzungsrate unter einem Schwellenwert liegt.

17. Verfahren nach Anspruch 15, umfassend das Anbieten von Rechnervorrichtungsressource mit einer maximalen Angebotsrate, wenn die bestimmte mittlere Nutzungsrate über einem Schwellenwert liegt.

18. Verfahren nach einem der Ansprüche 15 bis 17, umfassend, für mindestens einige bestimmte mittlere Nutzungsraten, das Anbieten von Rechnervorrichtungsressource mit einer Rate, die proportional zu der bestimmten mittleren Nutzungsrate ist.

19. Verfahren nach Anspruch 15 oder 18, umfassend das Anbieten von Rechnervorrichtungsressource mit einer Angebotsrate, die bestimmt wird als die höhere von (i) einer vorbestimmten minimalen Angebotsrate und (ii) einer bestimmten Angebotsrate, die basierend auf der mittleren Nutzungsrate und der verfügbaren Ressource bestimmt wird.

20. Verfahren nach Anspruch 15, wobei die Angebotsrate als eine Drosselungsrate bestimmt wird, die auf die verfügbare Ressource angewendet wird, wobei die Drosselungsrate die niedrigere umfasst von (i) einer vorbestimmten maximalen Drosselungsrate und (ii) einer bestimmten Drosselungsrate, die Folgendes umfasst:

$$1 - \frac{mittlere\ Nutzungsrate\ *\ offers\_sent\ *\ n}{verfügbare\ Ressource}$$

wobei n einen vorbestimmten Faktor umfasst und offers_sent die Anzahl von in dem ausgewählten Kandidaten-Überwachungsfenster gesendeten Angeboten umfasst.

21. Verfahren nach einem der Ansprüche 15 bis 20, ferner umfassend das Empfangen einer Vielzahl von Benachrichtigungen über Rechnervorrichtungsressource-Nutzungsereignisse, wobei jede Benachrichtigung einen Identifikator umfasst und wobei die Nutzungsraten basierend auf den empfangenen Benachrichtigungen bestimmt werden.

22. Verfahren nach Anspruch 21, wobei die Nutzungsraten in Bezug auf Benachrichtigungen über Rechnervorrichtungsressource-Nutzungsereignisse bestimmt werden, die vorbestimmten Kriterien entsprechen.

23. Verfahren nach einem der Ansprüche 15 bis 22, umfassend das Empfangen (402) einer Vielzahl von Benachrichtigungen über Rechnervorrichtungsressourcenverfügbarkeit von mindestens einer Rechnervorrichtung, die Rechnervorrichtungsressource bereitstellt, wobei jede Benachrichtigung einen Identifikator umfasst.

24. Verfahren nach Anspruch 23, wobei Angebote Angebote von verfügbarer Rechnervorrichtungsressource umfassen, die durch die empfangenen Benachrichtigungen über Rechnervorrichtungsressourcenverfügbarkeit identifiziert wird.

25. Verfahren nach einem der Ansprüche 15 bis 24, umfassend das Empfangen (606) einer Ressourcenanforderung als Reaktion auf mindestens eines der Angebote und das Weiterleiten (706) der Ressourcenanforderung an eine Rechnervorrichtung, die die angeforderte Rechnervorrichtungsressource bereitstellt.

26. Verfahren nach einem der Ansprüche 15 bis 25, umfassend:

Bestimmen einer mittleren Nutzungsrate für jede einer Vielzahl von Entitäten;

Anbieten von Rechnervorrichtungsressource an jede Entität mit einer Rate, die auf der bestimmten mittleren Nutzungsrate für jene Entität basiert;
Empfangen einer Vielzahl von Ressourcenanforderungen als Reaktion auf mindestens eines der Angebote;
Auswählen (710) einer der Anforderungen; und
Weiterleiten (712) der ausgewählten Ressourcenanforderung an eine Rechnervorrichtung, die die angeforderte Rechnervorrichtungsressource bereitstellt.

27. Verfahren nach Anspruch 25 oder 26, ferner umfassend das Empfangen einer Akzeptanz einer Ressourcenanforderung von der Rechnervorrichtung, die die angeforderte Rechnervorrichtungsressource bereitstellt.

28. Verfahren nach einem der Ansprüche 15 bis 27, umfassend das Bestimmen einer mittleren Nutzungsrate für eine Ressourcenkategorie, wobei Ressourcen basierend auf einem damit assoziierten Identifikator kategorisiert werden; und
Anbieten von Rechnervorrichtungsressource an die Entität mit einer Rate, die auf der bestimmten mittleren Nutzungsrate für Rechnervorrichtungsressource in der gleichen Ressourcenkategorie basiert.

29. Verfahren nach einem der Ansprüche 15 bis 28, ferner umfassend, wenn ein Angebot für eine Ressource durch mindestens eine Rechnervorrichtung akzeptiert wird, die jene Rechnervorrichtungsressource bereitstellt, Zuweisen jener Rechnervorrichtungsressource an die Rechnervorrichtung.

30. Verfahren nach Anspruch 29, ferner umfassend das Empfangen (614) von Daten von der Entität und das Senden (616) der Daten an die Rechnervorrichtung, die jene Rechnervorrichtungsressource bereitstellt, wobei die Daten durch die Rechnervorrichtung, die jene Rechnervorrichtungsressource bereitstellt, beim Nutzen jener Rechnervorrichtungsressource zu verarbeiten sind.

31. Nichtflüchtiges maschinenlesbares Medium (802), das mit Anweisungen codiert ist, die, wenn sie durch eine Verarbeitungsschaltung ausgeführt werden, die Verarbeitungsschaltung veranlassen, das Verfahren nach einem der Ansprüche 15 bis 30 auszuführen.

**Revendications**

1. Plateforme de mise en correspondance de ressources (100) comprenant un circuit de traitement (102), le circuit de traitement (102) comprenant :

un module de surveillance (104) configuré pour déterminer périodiquement un taux d'utilisation moyen, dans laquelle le taux d'utilisation moyen comprend un taux auquel une ressource de dispositif informatique est utilisée par une entité ; et
un module d'offre (106) configuré pour offrir une ressource de dispositif informatique à l'entité, dans laquelle le module d'offre (106) est en outre configuré pour adapter un taux auquel une ressource de dispositif informatique est offerte à l'entité sur la base d'un taux d'utilisation moyen déterminé actuel pour l'entité ;
dans laquelle le module de surveillance (106) est configuré pour déterminer le taux d'utilisation moyen par :

la détermination (i) d'un taux d'utilisation moyen et (ii) d'une mesure de variabilité du taux d'utilisation pour chacune d'une pluralité de fenêtres de surveillance candidates, dans laquelle les fenêtres de surveillance candidates comprennent une pluralité de fenêtres temporelles ayant une heure de fin commune et des heures de début différentes ;
la détermination, pour chacune de la pluralité de fenêtres de surveillance candidates, d'un premier taux réglé, dans laquelle le premier taux réglé comprend le taux d'utilisation moyen pour cette fenêtre de surveillance candidate plus la mesure de variabilité pour cette fenêtre de surveillance candidate ;
la détermination, pour chacune de la pluralité de fenêtres de surveillance candidates, d'un second taux réglé, dans laquelle le second taux réglé comprend le taux d'utilisation moyen pour cette fenêtre de surveillance candidate moins la mesure de variabilité pour cette fenêtre de surveillance candidate ;
l'identification d'une première fenêtre de surveillance candidate de la pluralité de fenêtres de surveillance candidates, dans laquelle la première fenêtre de surveillance candidate est la fenêtre de surveillance candidate pour laquelle le premier taux réglé est minimal ;
l'identification d'une seconde fenêtre de surveillance candidate de la pluralité de fenêtres de surveillance candidates, dans laquelle la seconde fenêtre de surveillance candidate est la fenêtre de surveillance candidate pour laquelle le second taux réglé est maximal ;
la sélection de la plus courte des première et seconde fenêtres de surveillance candidates comme fenêtre de surveillance ; et
la détermination du taux d'utilisation moyen pour cette fenêtre comme taux d'utilisation moyen déterminé pour l'entité.

2. Plateforme de mise en correspondance de ressources (100) selon la revendication 1, dans laquelle le module d'offre (106) est configuré pour offrir des ressources de dispositif informatique à un taux d'offre minimal lorsque le taux d'utilisation moyen déterminé est inférieur à un seuil.

3. Plateforme de mise en correspondance de ressources (100) selon une quelconque revendication précédente, dans laquelle le module d'offre (106) est configuré pour offrir des ressources de dispositif informatique à un taux d'offre maximal lorsque le taux d'utilisation moyen déterminé est supérieur à un seuil.

4. Plateforme de mise en correspondance de ressources (100) selon une quelconque revendication précédente, dans laquelle, pour au moins certains taux d'utilisation moyens déterminés, le module d'offre (106) est configuré pour offrir des ressources de dispositif informatique à un taux qui est proportionnel au taux d'utilisation moyen déterminé, dans laquelle un rapport entre le taux d'offre et le taux d'utilisation moyen déterminé peut être prédéterminé par l'entité.

5. Plateforme de mise en correspondance de ressources (100) selon la revendication 1, dans laquelle le taux d'offre est déterminé comme étant le plus élevé entre (i) un taux d'offre minimal prédéterminé et (ii) un taux d'offre déterminé sur la base du taux d'utilisation moyen et de la ressource disponible.

6. Plateforme de mise en correspondance de ressources (100) selon la revendication 1, dans laquelle le taux d'offre est un taux de limitation appliqué à la ressource de dispositif informatique disponible, dans laquelle le taux de limitation comprend le plus faible entre (i) un taux de limitation maximal prédéterminé et (ii) un taux de limitation déterminé comprenant :

$$1 - \frac{taux\ d'utilisation\ moyen\ *\ offres\_envoyées\ *n}{ressource\ disponible}$$

dans laquelle n comprend un facteur prédéterminé et offres_envoyées comprend le nombre d'offres envoyées dans la fenêtre de surveillance candidate sélectionnée.

7. Plateforme de mise en correspondance de ressources (100) selon une quelconque revendication précédente, dans laquelle le module de surveillance (104) est en outre configuré pour surveiller un taux d'utilisation au fil du temps et déterminer le taux d'utilisation moyen à partir de celui-ci, et dans laquelle la surveillance du taux d'utilisation comprend :
la réception d'une pluralité de notifications d'utilisation de ressources, chaque notification comprenant un identifiant.

8. Plateforme de mise en correspondance de ressources (100) selon une quelconque revendication précédente, dans laquelle le module de surveillance (104) est en outre configuré pour identifier des ressources disponibles, et où les offres comprennent des offres de ressources disponibles identifiées.

9. Plateforme de mise en correspondance de ressources (100) selon une quelconque revendication précédente, dans laquelle le module d'offre (106) est en outre configuré pour comporter, dans l'offre, des détails de la ressource de dispositif informatique disponible.

10. Plateforme de mise en correspondance de ressources (100) selon une quelconque revendication précédente, dans laquelle le module d'offre (106) est configuré pour recevoir des détails d'une ressource disponible d'au moins un dispositif informatique, et les offres comprennent une offre de la ressource disponible.

11. Plateforme de mise en correspondance de ressources (100) selon une quelconque revendication précédente, comprenant en outre un module d'allocation de ressources (304) configuré pour, lorsqu'une offre de ressource de dispositif informatique est acceptée par une entité, allouer ou demander l'allocation de la ressource de dispositif informatique offerte à l'entité.

**12.** Plateforme de mise en correspondance de ressources (100) selon la revendication 11, dans laquelle le module d'allocation de ressources (304) est en outre configuré pour recevoir des données à partir de l'entité et pour envoyer les données au dispositif informatique fournissant la ressource de dispositif informatique offerte, dans laquelle les données doivent être traitées par le dispositif informatique en utilisant la ressource de dispositif informatique offerte.

**13.** Plateforme de mise en correspondance de ressources (100) selon la revendication 11 ou 12, dans laquelle le module d'offre (106) est configuré pour offrir la même ressource de dispositif informatique à une pluralité d'entités et, si plus d'une de la pluralité d'entités de la pluralité demande cette ressource de dispositif informatique offerte, le module d'allocation de ressources (304) doit sélectionner une entité de la pluralité d'entités et demander l'allocation de la ressource de dispositif informatique offerte à l'entité sélectionnée.

**14.** Plateforme de mise en correspondance de ressources (100) selon une quelconque revendication précédente, dans laquelle la mesure de variabilité comprend une erreur standard.

**15.** Procédé de mise en correspondance de ressources comprenant, par un circuit de traitement :

la détermination (502) d'une pluralité de fenêtres de surveillance candidates, les fenêtres de surveillance candidates comprenant différentes périodes de temps pendant lesquelles une ressource de dispositif informatique est utilisée par une entité, dans lequel les fenêtres de surveillance candidates ont une heure de fin commune et des heures de début différentes ;
la détermination (504), pour chacune de la pluralité de fenêtres de surveillance candidates, (i) d'un taux d'utilisation moyen et (ii) d'une mesure de variabilité du taux d'utilisation, le taux d'utilisation moyen comprenant un taux moyen auquel une ressource de dispositif informatique est utilisée par l'entité dans une fenêtre de surveillance ;
la détermination (506), pour chacune de la pluralité de fenêtres de surveillance candidates, d'un premier taux réglé, dans lequel le premier taux réglé comprend le taux d'utilisation moyen pour cette fenêtre de surveillance candidate plus la mesure de variabilité pour cette fenêtre de surveillance candidate ;
la détermination (508), pour chacune de la pluralité de fenêtres de surveillance candidates, d'un second taux réglé, dans lequel le second taux réglé comprend le taux d'utilisation moyen pour cette fenêtre de surveillance candidate moins la mesure de variabilité pour cette fenêtre de surveillance candidate ;
l'identification (510) d'une première fenêtre de surveillance candidate de la pluralité de fenêtres de surveillance candidates, dans lequel la première fenêtre de surveillance candidate est la fenêtre de surveillance candidate pour laquelle le premier taux réglé est minimal ;
l'identification (512) d'une seconde fenêtre de surveillance candidate de la pluralité de fenêtres de surveillance candidates, dans lequel la seconde fenêtre de surveillance candidate est la fenêtre de surveillance candidate pour laquelle le second taux réglé est maximal ;
la sélection (514) de la plus courte des première et seconde fenêtres de surveillance candidates comme fenêtre de surveillance et du taux d'utilisation moyen de cette fenêtre comme taux d'utilisation moyen déterminé pour l'entité ;
l'offre (516) d'une ressource de dispositif informatique à l'entité à un taux sur la base du taux d'utilisation moyen déterminé ;
dans lequel le taux d'utilisation moyen et le taux auquel des ressources de dispositif informatique sont offertes sont déterminés de manière périodique.

**16.** Procédé selon la revendication 15, comprenant l'offre d'une ressource de dispositif informatique à un taux d'offre minimal lorsque le taux d'utilisation moyen déterminé est inférieur à un seuil.

**17.** Procédé selon la revendication 15, comprenant l'offre d'une ressource de dispositif informatique à un taux d'offre maximal lorsque le taux d'utilisation moyen déterminé est supérieur à un seuil.

**18.** Procédé selon l'une quelconque des revendications 15 à 17 comprenant, pour au moins certains taux d'utilisation moyens déterminés, l'offre d'une ressource de dispositif informatique à un taux qui est proportionnel au taux d'utilisation moyen déterminé.

**19.** Procédé selon la revendication 15 ou 18, comprenant l'offre d'une ressource de dispositif informatique à un taux d'offre déterminé comme étant le plus élevé entre (i) un taux d'offre minimal prédéterminé et (ii) un taux d'offre déterminé sur la base du taux d'utilisation moyen et de la ressource disponible.

**20.** Procédé selon la revendication 15, dans lequel le taux d'offre est déterminé comme étant un taux de limitation appliqué à la ressource disponible, dans lequel le taux de limitation comprend le plus faible entre (i) un taux de limitation maximal prédéterminé et (ii) un taux de limitation déterminé comprenant :

$$1 - \frac{taux\ d'utilisation\ moyen\ *\ offres\_envoyées\ *\ n}{ressource\ disponible}$$

dans lequel n comprend un facteur prédéterminé et offres_envoyées comprend le nombre d'offres envoyées dans la fenêtre de surveillance candidate sélectionnée.

**21.** Procédé selon l'une quelconque des revendications 15 à 20 comprend en outre la réception d'une pluralité de notifications d'événements d'utilisation de ressource de dispositif informatique, chaque notification comprenant un identifiant et dans lequel les taux d'utilisation sont déterminés sur la base des notifications reçues.

**22.** Procédé selon la revendication 21, dans lequel les taux d'utilisation sont déterminés par rapport à des notifications d'événements d'utilisation de ressource de dispositif informatique correspondant à des critères prédéterminés.

**23.** Procédé selon l'une quelconque des revendications 15 à 22, comprenant la réception (402) d'une pluralité de notifications de disponibilité de ressource de dispositif informatique à partir d'au moins un dispositif informatique fournissant une ressource de dispositif informatique, chaque notification comprenant un identifiant.

**24.** Procédé selon la revendication 23, dans laquelle les offres comprennent des offres de ressources de dispositif informatique disponibles identifiées par les notifications reçues de disponibilité de ressources de dispositif informatique.

**25.** Procédé selon l'une quelconque des revendications 15 à 24, comprenant la réception (606) d'une demande de ressource en réponse à au moins une des offres, et la transmission (706) de la demande de ressource à un dispositif informatique fournissant la ressource de dispositif informatique demandée.

**26.** Procédé selon l'une quelconque des revendications 15 à 25, comprenant :

la détermination d'un taux d'utilisation moyen pour chacune d'une pluralité d'entités ;
l'offre d'une ressource de dispositif informatique à chaque entité à un taux sur la base du taux d'utilisation moyen déterminé pour cette entité ;
la réception d'une pluralité de demandes de ressource en réponse à au moins une des offres ;
la sélection (710) de l'une des demandes ; et
la transmission (712) de la demande de ressource sélectionnée à un dispositif informatique fournissant la ressource de dispositif informatique demandée.

**27.** Procédé selon la revendication 25 ou 26, comprenant en outre la réception d'une acceptation d'une demande de ressource à partir du dispositif informatique fournissant la ressource de dispositif informatique demandée.

**28.** Procédé selon l'une quelconque des revendications 15 à 27, comprenant la détermination d'un taux d'utilisation moyen pour une catégorie de ressource, dans lequel les ressources sont catégorisées sur la base d'un identifiant associé à celles-ci ; et
l'offre d'une ressource de dispositif informatique à l'entité à un taux sur la base du taux d'utilisation moyen déterminé pour une ressource de dispositif informatique dans la même catégorie de ressources.

**29.** Procédé selon l'une quelconque des revendications 15 à 28, comprenant en outre, lorsqu'une offre pour une ressource est acceptée par au moins un dispositif informatique fournissant cette ressource de dispositif informatique, l'allocation de cette ressource de dispositif informatique au dispositif informatique.

**30.** Procédé selon la revendication 29, comprenant en outre la réception (614) de données à partir de l'entité et l'envoi (616) des données au dispositif informatique fournissant cette ressource de dispositif informatique, dans lequel les données doivent être traitées par le dispositif informatique fournissant cette ressource de dispositif informatique en utilisant cette ressource de dispositif informatique.

31. Support non transitoire lisible par machine (802) encodé avec des instructions qui, lorsqu'elles sont exécutées par un circuit de traitement, amènent le circuit de traitement à réaliser le procédé selon l'une quelconque des revendications 15 à 30.

Resource Matching Platform 100

Processing Circuitry 102

Monitoring Module
104

Offer Module
106

Fig. 1

Fig. 2

First Entity
300

Resource Matching Platform 100

Processing Circuitry 102

Monitoring Module 104

Offer Module 106

Resource Allocation Module 304

302a
302b
302c
302d
302e

Fig. 3

402

404

406

| Receive plurality of notifications of resource availability | Send plurality of offers of available resource availability | Receive plurality of notifications of resource utilisation |

For a set of notifications of resource utilisation associated with an identifier meeting predetermined criteria, determine offer rate

408

FIG. 4

Determine plurality of candidate monitoring windows 502

Determine mean utilisation rate and measure of variability 504

Determine 1st adjusted rate for each candidate monitoring window 506

Determine 2nd adjusted rate for each candidate monitoring window 508

Identify 1st candidate monitoring window for which 1st adjusted rate is a minimum 510

yes

Identify 2nd candidate monitoring window for which 2nd adjusted rate is a maximum 512

Select shorter of 1st and 2nd candidate monitoring windows & mean for that window as determined mean utilisation rate 514

Offer computing device resource at rate based on the determined mean utilisation rate 516

Predetermined time elapsed? 518

Fig. 5

```
                    ╱╲
                   ╱   ╲
                  ╱      ╲  ⌇ 602
                 ╱  Offer  ╲
                ╱ resource to be ╲
                ╲ passed on?  ╱
                 ╲          ╱
                  ╲        ╱
                   ╲      ╱
                    ╲    ╱
                     yes
                      │
        ┌─────────────────────────────┐
        │   Offer available resource   │  ⌇ 604
        └─────────────────────────────┘
                      │
        ┌─────────────────────────────┐
        │    Receive resource request  │  ⌇ 606
        └─────────────────────────────┘
                      │
                    ╱╲
                   ╱   ╲  ⌇ 607
                  ╱ Request ╲
                 ╱  to be    ╲
                 ╲ passed on? ╱
                  ╲          ╱
                   ╲        ╱
                     yes
                      │
        ┌─────────────────────────────┐
        │       Request resource       │  ⌇ 608
        └─────────────────────────────┘
                      │
                    ╱╲  610
                   ╱   ╲
                  ╱Acceptance╲
                 ╱ of request ╲
                 ╲  received?  ╱
                  ╲          ╱
                   ╲        ╱  yes
                      │
        ┌─────────────────────────────┐
        │ Notify resource requesting entity │  ⌇ 612
        └─────────────────────────────┘
                      │
        ┌─────────────────────────────┐
        │   Receive data to utilise resource │  ⌇ 614
        └─────────────────────────────┘
                      │
                      ▼
        ┌─────────────────────────────┐
        │   Forward data to utilise resource │  ⌇ 616
        └─────────────────────────────┘
```

## Fig. 6

```
┌─────────────────────────────────────────────┐
│  Notification of available resource received  │  ～ 702
└─────────────────────────────────────────────┘
                       │
                       ▼
            ◇ Offer resource given throttle ◇   ～ 704
                      rate?
                       │
                      yes
                       │
                       ▼
┌─────────────────────────────────────────────┐
│ Offer passed on to one or more resource       │  ～ 706
│ requesting entity                             │
└─────────────────────────────────────────────┘
                       │
                       ▼
     no        ◇ Multiple Request ◇   708
   ◄──────────    for resource
                   received?
                       │
                      yes
                       │
                       ▼
┌─────────────────────────────────────────────┐
│      Select resource requesting entity        │  ～ 710
└─────────────────────────────────────────────┘
                       │
                       ▼
┌─────────────────────────────────────────────┐   712
│  Forward request to resource providing entity │
└─────────────────────────────────────────────┘
```

Fig. 7

MRM
802

Processor
804

Fig. 8

**EP 4 664 283 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3455732 B1